(19) Europäisches Patentamt
European Patent Office
Office européen des brevets

(11) **EP 3 447 082 A1**

(12) **EUROPEAN PATENT APPLICATION**
published in accordance with Art. 153(4) EPC

(43) Date of publication:
**27.02.2019 Bulletin 2019/09**

(51) Int Cl.:
**C08J 5/18** (2006.01)　　　**B32B 27/00** (2006.01)
**H01B 3/46** (2006.01)

(21) Application number: **17785880.0**

(22) Date of filing: **12.04.2017**

(86) International application number:
**PCT/JP2017/015028**

(87) International publication number:
**WO 2017/183541 (26.10.2017 Gazette 2017/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.04.2016 JP 2016086460**

(71) Applicant: **Dow Corning Toray Co., Ltd.**
**Tokyo 100-0004 (JP)**

(72) Inventors:
• **FUKUI Hiroshi**
  **Ichihara-shi**
  **Chiba 299-0108 (JP)**
• **MASATOMI Toru**
  **Ichihara-shi**
  **Chiba 299-0108 (JP)**
• **TSUDA Takeaki**
  **Ichihara-shi**
  **Chiba 299-0108 (JP)**

(74) Representative: **Murgitroyd & Company**
**Scotland House**
**165-169 Scotland Street**
**Glasgow G5 8PL (GB)**

(54) **HIGHLY DIELECTRIC FILM, USAGES THEREOF, AND MANUFACTURING METHOD THEREFOR**

(57)　An object of the present invention is to provide a highly dielectric film that is formed of a fluoroalkyl-group-containing organopolysiloxane cured product and that has a high dielectric constant and is substantially flat and uniform in a width direction of the film, usages thereof and a manufacturing method therefor. There is provided the highly dielectric film formed of a fluoroalkyl-group-containing organopolysiloxane cured product, in which in a width direction of the film, a difference between a thickness at an end of the film and a thickness at a center of the film is 5.0% or less, and the thickness at the center of the film falls within a range of 50 to 1000 $\mu$m. Such a film may be provided with a primer layer and a planarization layer, and the film may be obtained by means of rolling and may also be obtained by means of curing performed between separators provided with a separation layer.

**EP 3 447 082 A1**

**Description**

**TECHNICAL FIELD**

The present invention relates to a highly dielectric film that is formed of a fluoroalkyl-group-containing organopolysiloxane cured product and that has a high dielectric constant and is substantially flat and uniform in a width direction of the film, usages thereof and a manufacturing method therefor.

**BACKGROUND ART**

Polysiloxane-based pressure-sensitive adhesive compositions are superior in electrical insulating property, heat resistance, cold resistance and adhesiveness to various adherends as compared with acrylic or rubber-based pressure-sensitive adhesive compositions, and thus have been used for a heat resistance adhesive tape, an electrically insulating adhesive tape, a heat seal tape, a plating masking tape, and the like. These polysiloxane-based pressure-sensitive adhesive compositions are classified into an addition reaction curing type, a condensation reaction curing type, a peroxide curing type and the like according to their curing mechanisms. The addition reaction curing type pressure-sensitive adhesive composition has been generally used because it is quickly cured by being left at room temperature or by heating and does not generate byproducts.

Due to the above-mentioned characteristics and high transparency of the polysiloxane-based pressure-sensitive adhesive, the polysiloxane-based pressure-sensitive adhesives have recently been studied for applications in advanced electronic display devices such as smart devices. Such a device has a structure in which a film having a plurality of layers including an electrode layer and a display layer is sandwiched between transparent substrates, and for the purpose of protecting the electrode layer and the display layer and improving adhesion between the layers, the polysiloxane-based pressure-sensitive adhesives having high heat resistance, cold resistance, and transparency are expected to act effectively. Examples of material properties of the pressure-sensitive adhesives required for sensor usages such as a pressure sensor among these smart devices may include high dielectric properties as well as excellent transparency. In order to increase sensitivity of the sensor, it is necessary to obtain a high electrostatic capacitance under a constant voltage, and for this purpose, a high relative dielectric constant is required for the material to be used. Examples of a polymer material having the high relative dielectric constant may include polyvinylidene fluoride and a polyvinylidene fluoride copolymer, and it is known that these materials can be used as a piezoelectric material and a pyroelectric material. For example, Jpn. Pat. Appln. KOKAI Publication No. 2010-108490 (Patent Literature 1) discloses a transparent piezoelectric sheet containing a vinylidene fluoride-tetrafluoroethylene copolymer, which is used for a touch panel. In addition, Jpn. Pat. Appln. KOKAI Publication No. 2011-222679 (Patent Literature 2) discloses that in addition to a vinylidene fluoride-tetrafluoroethylene copolymer, a vinylidene fluoride-trifluoroethylene copolymer and polyvinylidene fluoride are used as a material of a transparent piezoelectric film of a transparent piezoelectric sheet. On the other hand, the vinylidene fluoride-based polymer has a problem that it deteriorates in processability for manufacturing molded articles such as a film due to its high crystallinity.

On the other hand, the relative dielectric constant of a general-purpose polymer material having excellent transparency and processability usually has a value of 2 to 4, but this value can be increased to 5 to 7 or more by appropriately designing the polymer structure. In order to increase the relative dielectric constant of the polysiloxane, it is already known that it is effective to introduce a fluoroalkyl group as a substituent on silicon, and the present inventors have also found that a fluoroalkyl-group-containing organopolysiloxane cured product has a high relative dielectric constant and is useful as a transducer material (International Publication No. 2014-105959, Patent Literature 3).

On the other hand, a pressure-sensitive adhesive containing the fluoroalkyl-group-containing organopolysiloxane have already been studied as well. For example, U.S. Patent No. 5436303 (Patent Literature 4) discloses a pressure-sensitive adhesive that has an $R_3SiO_{1/2}$ unit (wherein R is an alkyl group) and a $SiO_{4/2}$ unit and contains an MQ resin having a silanol group and a fluoroalkyl silicone. In addition, International Publication No. 1994-6878 (Patent Literature 5) discloses a copolymer formed of a fluoroalkyl silicone and a vinyl monomer and a pressure-sensitive adhesive that contains the copolymer and has good solvent resistance. In these technologies, the MQ resin serving as a key to pressure-sensitive adhesion does not have a fluoroalkyl group and its transparency is unknown, and is not actually described. On the other hand, U.S. Patent No. 7253238 (Patent Literature 6) discloses an MQ resin that has an $R_3SiO_{1/2}$ unit (wherein R is an alkyl group), an $R (CH_2 = CH) SiO_{2/2}$ unit (wherein R is an alkyl group), and a $SiO_{4/2}$ unit specifying a structure and contains a fluoroalkyl group and a pressure-sensitive adhesive containing the same. In addition, Japanese Patent No. 5066078 (Patent Literature 7) discloses an MQ resin that is produced in a limited manner and contains a fluoroalkyl group and a pressure-sensitive adhesive containing the same. In addition, Jpn. Pat. Appln. KOKAI Publication No. 2010-502781 (Patent Literature 8) also discloses a laminate formed of a fluoroalkyl silicone pressure-sensitive adhesive composition and a silicone liner. However, in these pressure-sensitive adhesive compositions, only a peroxide curing system is disclosed, and an addition type curing system in which a curing rate is high, there is little shrinkage during molding processing, and desired curing conditions are easily set has not been studied. In addition, dielectric properties have not been studied and a description thereof is also not suggested. Accordingly, an addition curing type fluoroalkyl-group-containing organopolysiloxane having excellent transparency and a high relative dielectric constant, a pressure-sensitive adhesive laminate film containing the same, and a display device including the pressure-sensitive adhesive laminate film have not yet been reported.

On the other hand, Jpn. PCT National Publication No. 2014-522436 (Patent Literature 9) or Jpn. PCT National Publication No. 2013-512326 (Patent Literature 10) discloses a production of an optically transparent silicone-based pressure-sensitive adhesive film and a display device such as a touch panel using the same, but performance of these silicone-based pressure-sensitive adhesive films still has room for improvement.

In view of these prior arts, the applicant of the present application found that the above problems can be solved by using a specific fluoroalkyl-group-containing organopolysiloxane cured product, and suggests the dielectric materials according to International Application No. PCT / JP2015 / 006198 (Patent Literature 11) and PCT / JP2016 / 001299 (Patent Literature 12). These fluoroalkyl-group-containing organopolysiloxane cured products have advantages in that they have the excellent transparency, are excellent in a function as the pressure-sensitive adhesive, have the good processability for producing the molded articles such as the film, and have the high relative dielectric constant. Further, these fluoroalkyl-group-containing organopolysiloxane cured products have advantages in that they have almost no shrinkage during the molding processing, the curing rate is high, and the desired curing conditions can be easily set.

Citation List

Patent Literature

Patent Literature 1: Jpn. Pat. Appln. KOKAI Publication No. 2010-108490
Patent Literature 2: Jpn. Pat. Appln. KOKAI Publication No. 2011-222679
Patent Literature 3: International Publication No. 2014-105959
Patent Literature 4: U.S. Patent No. 5436303
Patent Literature 5: International Publication No. 1994-6878
Patent Literature 6: U.S. Patent No. 7253238
Patent Literature 7: Japanese Patent No. 5066078
Patent Literature 8: Jpn. Pat. Appln. KOKAI Publication No. 2010-502781
Patent Literature 9: Jpn. PCT National Publication No. 2014-522436
Patent Literature 10: Jpn. PCT National Publication No. 2013-512326
Patent Literature 11: International Application No. PCT / JP2015 / 006198
Patent Literature 12: International Application No. PCT / JP2016 / 001299

## SUMMARY OF INVENTION

Technical Problems

On the other hand, the inventors of the present application have found a new problem in the dielectric materials proposed in the above-mentioned Patent Literatures 11 and 12. When these dielectric fluoroalkyl-group-containing organopolysiloxane cured products are used for usages as electronic materials for a touch panel and the like and electronic members for a display device, particularly as transducer materials for a sensor and the like, they may be required to be molded into a film shape and used and it is preferable to obtain a uniform film-like cured product. However, since the fluoroalkyl group giving the dielectric properties and the organopolysiloxane that is a main chain have a high surface tension, when the curable fluoroalkyl-group-containing organopolysiloxane composition is applied onto, in particular, a substrate provided with a separation layer, in particular, when the curable fluoroalkyl-group-containing organopolysiloxane composition is applied at a thickness of 50 $\mu$m or more, a coating film tends to be formed in a non-uniform state. The highly dielectric film material obtained by curing such a non-uniform coating film as it is becomes non-uniform in a film thickness, but when the highly dielectric film material is used for a dielectric layer for the touch panel and the like, gaps between members and air bubbles are caused, thereby having an adverse effect on performance.

In addition, when the dielectric film which is the cured product of the curable fluoroalkyl-group-containing organopolysiloxane composition is used for the usages as the electronic materials for the touch panel, the electronic members for the display device, particularly, the transducer materials for the sensor and the like, from the viewpoint of handling workability, it is preferable to laminate the dielectric film on a separator having the separation layer and separate the dielectric film in use, but when the curable fluoroalkyl-group-containing organopolysiloxane composition is applied onto the substrate provided with the separation layer, in particular, when the curable fluoroalkyl-group-containing organopolysiloxane composition is applied at a thickness of 50 μm or more, both ends of a coating film protrude and thus a non-uniform coating film is formed, both ends of a film-like cured product formed by curing the same protrude, a central part of the film is largely recessed, and gaps between the members or air bubbles are caused when the dielectric film is used for the dielectric layer of the touch panel and the like, thereby adversely affect the performance of the dielectric film.

The formation of such a non-uniform film is a problem to be solved in order to further develop applications of the dielectric film which is the cured product of the curable fluoroalkyl-group-containing organopolysiloxane composition, and it is impossible to give the dielectric film excellent in dielectric properties, uniformity and flatness by using the fluoroalkyl-group-containing organopolysiloxane cured product in a known method.

Therefore, it is an object of the present invention to provide a highly dielectric film having dielectric properties equal to or higher than those proposed in the above-mentioned Patent Literatures 11 and 12, and excellent in uniformity and flatness in a width direction of the film, usages thereof and a manufacturing method therefor.

Solutions to Problems

As a result of intensive studies to solve the above-mentioned problems, the present inventors have found that with the highly dielectric film formed of a fluoroalkyl-group-containing organopolysiloxane cured product, in a width direction of the film, a difference between a thickness at an end of the film and a thickness at a center of the film is 5.0% or less, and the thickness at the center of the film falls within a range of 50 to 1000 μm, and reached the present invention. The fluoroalkyl-group-containing organopolysiloxane cured product can be used as a new pressure-sensitive adhesive material having excellent transparency and a high relative dielectric constant. The highly dielectric film having such uniformity and excellent flatness in the width direction of the film may be a highly dielectric film including a primer layer and a planarization layer laminated on the primer layer, a highly dielectric film in which a planarization layer is formed by curing and laminating a curable composition as a raw material while the curable composition is sandwiched between separators having a separation layer, and a highly dielectric film obtained by rolling a curable composition as a raw material.

In addition, the present inventors can suitably solve the above-mentioned problems when the fluoroalkyl group is a trifluoropropyl group, and have found that the above problems can be more preferably solved when a raw material of the fluoroalkyl-group-containing organopolysiloxane cured product is formed by curing a fluoroalkyl-group-containing organopolysiloxane curable organopolysiloxane composition containing fluoroalkyl-group-containing organopolysiloxane represented by the following average structural formula (II):

$$R^{Vi}R^2_2Si(OSiR^2R^3)_{e1'}(OSiR^2_2)_{e2'}OSiR^{Vi}R^2_2 \qquad (II)$$

{where in $R^{Vi}$ is an alkenyl group having 2 to 12 carbon atoms, $R^2$ is a group identical with the group, $R^3$ is a fluoroalkyl group represented by $(C_pF_{2p+1})$-R-(R is a group identical with the group and p is a number equal to the number), e is a number satisfying 5 < e1' + e2' + 2 < 500, and a value of (e1') / (e1' + e2') falls within a range from 0.5 to 1.0.}, and reached the present invention.

That is, the object of the present invention is accomplished by the following.

[1] There is provided a highly dielectric film formed of a fluoroalkyl-group-containing organopolysiloxane cured product, wherein in a width direction of the film, a difference between a thickness at an end of the film and a thickness at a center of the film is 5.0% or less, and the thickness at the center of the film falls within a range of 50 to 1000 μm.

Preferably, the object of the present invention is accomplished by the following highly dielectric film.

[2] In the highly dielectric film formed of a fluoroalkyl-group-containing organopolysiloxane cured product according to [1], the width of the film is 30 mm or more, an area of the film is 900 mm$^2$ or more, and a relative dielectric constant is 4 or more at 1 kHz and 25°C.

[3] In the highly dielectric film formed of a fluoroalkyl-group-containing organopolysiloxane cured product according to [1] or [2], the highly dielectric film is substantially transparent and the center of the film has a thickness ranging from 100 to 900 μm.

[4] In the highly dielectric film formed of a fluoroalkyl-group-containing organopolysiloxane cured product according to any one of [1] to [3], a shear storage elastic modulus falls within a range of $10^3$ to $10^5$ Pa at 23°C.

In particular, preferably, the object of the present invention is achieved by the film provided with the primer layer and the planarization layer for the curable composition, the film obtained by means of the rolling process or the film provided with the planarization layer by means of curing formed between the separators provided with the separation layer. These films can be designed as solvent-free and are preferable. That is, the object of the present invention is accomplished by the following highly dielectric film.

[5] In the highly dielectric film formed of a fluoroalkyl-group-containing organopolysiloxane cured product according to any one of [1] to [4], the highly dielectric film includes a primer layer and a planarization layer laminated on the primer layer.

[6] In the highly dielectric film formed of a fluoroalkyl-group-containing organopolysiloxane cured product according to any one of [1] to [5], the highly dielectric film includes a primer layer having a thickness of 5 to 40 $\mu$m and a planarization layer having a thickness of 10 to 800 $\mu$m laminated on the primer layer, and both the primer layer and the planarization layer are the fluoroalkyl-group-containing organopolysiloxane cured product.

[7] In the highly dielectric film formed of a fluoroalkyl-group-containing organopolysiloxane cured product according to any one of [1] to [6], the highly dielectric film is rolled.

[8] In the highly dielectric film formed of a fluoroalkyl-group-containing organopolysiloxane cured product according to any one of [1] to [7], the highly dielectric film has a planarization layer formed by being cured between separators having a separation layer

[8-1] The highly dielectric film formed of a fluoroalkyl-group-containing organopolysiloxane cured product according to any one of [1] to [8] does not substantially contain a solvent.

In addition, the object of the present invention is accomplished by the highly dielectric film formed by curing the following curable organopolysiloxane composition.

[9] In the highly dielectric film formed of a fluoroalkyl-group-containing organopolysiloxane cured product according to any one of [1] to [8], the highly dielectric film is formed by curing a curable organopolysiloxane composition containing at least fluoroalkyl-group-containing organopolysiloxane in which 10 mol% or more of all substituents are on a silicon atom is a fluoroalkyl group represented by $(C_pF_{2p+1})$-R- (R is an alkylene having 1 to 10 carbon atoms, p is a number ranging from 1 to 8).

[10] In the highly dielectric film formed of a fluoroalkyl-group-containing organopolysiloxane cured product according to any one of [1] to [9], the highly dielectric film is formed by curing a fluoroalkyl-group-containing curable organopolysiloxane composition that contains

(A) fluoroalkyl-group-containing organopolysiloxane represented by the following structural formula (I):

$$R^1R^2_2Si(OSiR^1R^2)_{e1}\ (OSiR^2_2)_{e2}\ OSiR^1R^2_2 \qquad (I)$$

{wherein $R^1$ is a fluoroalkyl group represented by $(C_pF_{2p+1})$-R- (R is a group identical with the group and p is a number ranging from 1 to 8) or an alkenyl group having 2 to 12 carbon atoms, $R^2$ is, identically or independently, an alkyl group having 1 to 12 carbon atoms, an aryl group having 6 to 20 carbon atoms, an aralkyl group having 7 to 20 carbon atoms, a hydroxyl group, or an alkoxy group having 1 to 6 carbon atoms, and at least two of all $R^1$ are an alkenyl group having 2 to 12 carbon atoms, 10 mol% or more of all $R^1$ and $R^2$ is the fluoroalkyl-group, e1 is a positive number, e2 is 0 or a positive number and a number satisfying $5 < e1 + e2 + 2 < 500$.}

(B) organohydrogenpolysiloxane having at least two silicon-bonded hydrogen atoms in a molecule which is adjusted so that the silicon-bonded hydrogen atom in this component is 0.1 to 1.0 mol with respect to 1 mol of a total amount of the alkenyl group of the component (A),

(C) an effective amount of a hydrosilylation reaction catalyst, and

(D) a solvent of 0 to 2000 parts by mass with respect to 100 parts by mass of a sum of the components (A) to (C).

[11] In the highly dielectric film formed of a fluoroalkyl-group-containing organopolysiloxane cured product according to [10], the (A) contains fluoroalkyl-group-containing organopolysiloxane represented by the following average structural formula (II):

$$R^{Vi}R^2_2Si(OSiR^2R^3)_{e1'}(OSiR^2_2)_{e2'}OSiR^{Vi}R^2_2 \qquad (II)$$

{wherein $R^{Vi}$ is an alkenyl group having 2 to 12 carbon atoms, $R^2$ is a group identical with the group, $R^3$ is a fluoroalkyl group represented by $(C_pF_{2p+1})$-R-(R is a group identical with the group, p is a number equal to the number), e1' and e2' are a number satisfying $5 < e1' + e2' + 2 < 500$, and a value of (e1') / (e1' + e2') falls within a range from 0.5 to 1.0, and e2' is 0 or a positive number}.

[12] In the highly dielectric film formed of a fluoroalkyl-group-containing organopolysiloxane cured product according to [10], the component (B) is an organohydrogenpolysiloxane having a fluoroalkyl group represented by $(C_pF_{2p+1})$-R-

(R is a group identical with the group and p is a number equal to the number).

In addition, the object of the present invention is usages of the above-mentioned highly dielectric film, the laminate including the highly dielectric film and usages thereof, and is accomplished by the following inventions.

[13] A use as an electronic material or a member for a display device of the highly dielectric film formed of a fluoroalkyl-group-containing organopolysiloxane cured product according to any one of [1] to [12].

[14] A laminate having a structure in which the highly dielectric film formed of a fluoroalkyl-group-containing organopolysiloxane cured product according to any one of [1] to [12] is laminated on a sheet-like substrate provided with a separation layer.

[15] An electronic component or a display device having the highly dielectric film formed of a fluoroalkyl-group-containing organopolysiloxane cured product according to any one of [1] to [12].

[16] A touch panel having the highly dielectric film formed of a fluoroalkyl-group-containing organopolysiloxane cured product according to any one of [1] to [12] which is attached to a substrate having a conductive layer provided on one surface thereof and the conductive layer of the substrate or a surface opposite thereto.

In addition, the object of the present invention is accomplished by a manufacturing method for a highly dielectric film.

[17] A manufacturing method for the highly dielectric film formed of a fluoroalkyl-group-containing organopolysiloxane cured product according to any one of [1] to [12] includes process (I): a process of obtaining a primer layer by applying a curable organopolysiloxane composition containing at least the fluoroalkyl-group-containing organopolysiloxane onto a substrate and curing the curable organopolysiloxane so that a thickness after the curing becomes 40 $\mu$m or less, and

process (II): after the process (I), a process of obtaining a planarization layer by applying the curable organopolysiloxane composition containing at least the fluoroalkyl-group-containing organopolysiloxane onto the primer layer and curing the curable organopolysiloxane composition so that a thickness at a center of the film of the whole highly dielectric film after the curing becomes 50 to 1000 $\mu$m.

[18] In the manufacturing method for a highly dielectric film formed of a fluoroalkyl-group-containing organopolysiloxane cured product according to

[17], in the process (I), the substrate is a planar substrate having a separation surface, and the curable organopolysiloxane composition containing at least the fluoroalkyl-group-containing organopolysiloxane is applied onto the separation surface.

[19] In the manufacturing method for the highly dielectric film formed of a fluoroalkyl-group-containing organopolysiloxane cured product according to any one of [1] to [12], after the curable organopolysiloxane composition containing at least the fluoroalkyl-group-containing organopolysiloxane is applied onto the substrate, a rolling process is performed before or after the curing.

[20] In the manufacturing method for the highly dielectric film formed of a fluoroalkyl-group-containing organopolysiloxane cured product according to any one of [1] to [12], the curable organopolysiloxane composition containing at least the fluoroalkyl-group-containing organopolysiloxane is cured while being sandwiched between separators having a separation layer.

Advantageous Effects of Invention

According to the present invention, it is possible to provide the highly dielectric film formed of a fluoroalkyl-group-containing organopolysiloxane cured product that is excellent in the uniformity and the flatness in the width direction of the film, and the high relative dielectric constant. The highly dielectric film is the dielectric film or the sheet-like member which is excellent in handling workability and forms the dielectric layer, particularly the dielectric layer such as the transducer, and may have functions of a gel, an elastomer, an adhesive, and the like. More preferably, the highly dielectric film, the pressure-sensitive adhesive layer, particularly, the pressure-sensitive adhesive film can be suitably used for usages as the electronic material, the electronic member for the display device, particularly, the transducer material for the sensor and the like, and in particular, there is an advantage that it is possible to provide the display device such as the touch panel including the pressure-sensitive adhesive film.

**DESCRIPTION OF EMBODIMENTS**

Hereinafter, the highly dielectric film formed of a fluoroalkyl-group-containing organopolysiloxane cured product of the present invention will be described in detail.

Thickness, Uniformity and Flatness

With a highly dielectric film formed of a fluoroalkyl-group-containing organopolysiloxane cured product of the present invention, in a width direction of the film, a difference between a thickness at an end of the film and a thickness at the center of the film is 5.0% or less, and the thickness at the center of the film falls within a range of 50 to 1000 $\mu$m. The width direction of the film is a direction perpendicular to a length direction of the film, and generally means a direction perpendicular to a planar direction with respect to a direction in which the fluoroalkyl-group-containing curable organopolysiloxane composition as a raw material is applied onto a substrate. In the case of winding the film, a direction in which the film is wound is a length direction, and the width direction of the film is a direction perpendicular thereto. In a quadrilateral film or a substantially quadrilateral film, the width direction of the film is a direction perpendicular to a major-axis direction, and in a square film or a substantially square film, either a direction perpendicular or parallel to each side of the square film may be set as the width direction.

In the highly dielectric film of the present invention, in the width direction of the film, a difference (absolute value) between a thickness ($\mu$m) at an end of the film and a thickness ($\mu$m) at a center of the film is 5.0% or less, preferably 4.0% or less, and particularly preferably 3.5% or less. The film has both ends protruding, but it is preferable that the film has a flat and uniform structure with substantially no irregularities on a surface, and it is preferable that a maximum displacement (difference) of a thickness in the width direction of the film is set to be 5.0% or less, and it is particularly preferable that the film is a flat film with substantially no irregularities by setting the maximum displacement (difference) of the thickness in the whole film to be 5.0% or less.

The highly dielectric film of the present invention is formed of a film material having a constant thickness over the thickness at the center of the film exceeds 50 $\mu$m, and has a substantially flat structure with almost no difference in thickness in the film. Specifically, in the width direction of the film, the thickness at the center of the film is within a range of 50 to 1000 $\mu$m, preferably, the thickness at the center of the film is within a range of 100 to 900 $\mu$m, and particularly preferably, the thickness of the center of the film is within a range of 200 to 800 $\mu$m. If the thickness at the center of the film is less than a lower limit, the film thickness is too thin, so usages as a dielectric film may be limited, and if the thickness exceeds an upper limit, since the film thickness is too thick when the film is handled as a single layer, the film may not be suitable for usages such as touch panels which need to be thin.

Since the highly dielectric film of the present invention is the flat film with substantially no irregularities, the highly dielectric film has an advantage in that air bubbles caused by the irregularities between the films are entrained and deformation and defects are less likely to occur when the film is a single layer as well as when a plurality of film layers are overlapped to form a dielectric film layer having a uniform thickness. That is, although the highly dielectric film of the present invention has a thickness of 50 to 1000 $\mu$m, the plurality of films are overlapped to form the dielectric film layer exceeding 1000 $\mu$m, so the highly dielectric film can be used for the purpose of forming a large-capacity dielectric layer used for various transducers. The dielectric film constituting the dielectric layer formed of the film layer is included in the scope of the present invention.

The highly dielectric film of the present invention preferably has a constant size (area), the width of the film is preferably 30 mm or more, and the area of the film is preferably 900 mm$^2$ or more. Such a film is, for example, a dielectric film of 30 mm square or more, and it is particularly preferable that the dielectric film has a width of 50 mm or more and a length of 50 mm or more. The highly dielectric film of the present invention is the flat film with substantially no irregularities, and since the highly dielectric film has a structure in which a curable composition as a raw material is uniformly applied and cured even on a separation layer, in the length direction, the highly dielectric film can be used without limitation even if it can be wound up on the roll. In addition, it goes without saying that the highly dielectric film may be cut into a desired size and shape and used.

Transparency

The highly dielectric film of the present invention is a fluoroalkyl group-containing organopolysiloxane cured product, and substantially transparent when it is not blended with a colorant, a filler having a large particle size or the like. In particular, the highly dielectric film of the present invention can be used as a substantially transparent pressure-sensitive adhesive layer. Herein, the term "substantially transparent" means that when a film-like cured product having a thickness of 50 to 1000 $\mu$m is formed, the film is visually transparent, and in general, a transmittance of light having a wavelength of 450 nm is 80% or more when a value of air is set to be 100%.

Relative Dielectric Constant

The highly dielectric film of the present invention is a fluoroalkyl group-containing organopolysiloxane cured product, and a relative dielectric constant is 4 or more, preferably 5 or more, and more preferably 6 or more at 1 kHz and 25°C. As described below, the highly dielectric film having a relative dielectric constant of 6 or 7 can easily be designed by using a cured product of a curable organopolysiloxane composition containing at least fluoroalkyl-group-containing organopolysiloxane in which 10 mol% or more of all substituents on a silicon atom is a specific fluoroalkyl group such as a trifluoropropyl group.

Mechanical Physical Property

In the case in which the highly dielectric film of the present invention is used for usages as an electronic material for a touch panel and the like, an electronic member for a display device, particularly, a transducer material for a sensor or the like, a shear storage elastic modulus falls preferably within a range of $10^3$ to $10^5$ Pa at 23°C, and more preferably within a range of $1.0 \times 10^3$ to $5.0 \times 10^4$ Pa.

As other mechanical physical properties, a compression residual strain (%) defined by the method described in Examples and the like of the present application is preferably less than 10%, more preferably less than 5%, and particularly preferably less than 4%. In the highly dielectric film of the present invention, a material having a compression residual strain (%) of less than 3% can also be designed.

Similarly, in the highly dielectric film of the present invention, the compression residual strain (%) defined by the method described in Examples and the like of the present application is preferably 15% or more, more preferably 18% or more, and particularly preferably 20% or more.

Adhesive force

When the highly dielectric film of the present invention is used as a pressure-sensitive adhesive or pressure-sensitive adhesive layer, when a test piece in which a polyethylene terephthalate (PET) substrate (thickness of 50 $\mu$m) is laminated on both surfaces of the highly dielectric film having a thickness of 100 $\mu$m is peeled at an angle of 180° with a speed of 300 mm / min under an environment of 23°C and humidity of 50%, its adhesive force is preferably 5 N / m or more, and more preferably 10 N / m or more. It goes without saying that a highly dielectric film with no adhesive force can be used in the case in which the adhesive force can be applied to the substrate for closely adhering the highly dielectric film of the present invention by various treatments.

Structure of Highly Dielectric Film and Manufacturing Method Therefor

The highly dielectric film of the present invention is a flat film that is formed of a fluoroalkyl-group-containing organopolysiloxane cured product and has substantially no irregularities. Such a flat highly dielectric film can be realized by a structure in which a primer layer formed of a thin fluoroalkyl-group-containing organopolysiloxane cured product is formed on a substrate and a planarization layer formed of a fluoroalkyl-group-containing organopolysiloxane cured product is formed on the primer layer. Further, the curable organopolysiloxane composition can be realized by a structure in which the planarization layer is formed by being cured while being sandwiched between separators having a separation layer. In addition, such a flat highly dielectric film can be realized by coating the curable organopolysiloxane composition in a film shape and being cured by heating after being rolled. The film formed of the fluoroalkyl-group-containing organopolysiloxane cured product obtained by using the primer layer and the planarization layer may further be rolled, and a film coated or cured between separators provided with a separation layer may further be rolled. Hereinafter, the structure and manufacturing method for the highly dielectric film will be described.

Structure Having Primer Layer and Planarization Layer and Manufacturing Method Therefor

The highly dielectric film of the present invention can be obtained by a manufacturing method for a highly dielectric film including a process of applying a curable organopolysiloxane composition containing at least a fluoroalkyl-group-containing organopolysiloxane described later so that a thickness thereof after curing becomes 40 $\mu$m or less and curing the curable organopolysiloxane composition to obtain a primer layer, a process of applying a curable organopolysiloxane composition containing at least a fluoroalkyl-group-containing organopolysiloxane on the primer layer so that a thickness at a center of the whole highly dielectric film cured is 50 to 1000 $\mu$m and curing the curable organopolysiloxane composition to obtain a planarization layer. The thin primer layer formed of the fluoroalkyl-group-containing organopolysiloxane cured product can uniformly apply the curable organopolysiloxane composition on the primer layer without damaging characteristics of the whole highly dielectric film, and unlike the case in which the curable organopolysiloxane composition containing at least a fluoroalkyl-group-containing organopolysiloxane without the primer layer is applied onto a substrate, a planarization layer whose surface does not substantially have irregularities can be formed. In the case in which the above-mentioned curable organopolysiloxane composition is cured to have a specific film thickness while being sandwiched between the separators having the separation layer to form the planarization layer, the process of obtaining the primer layer is not necessarily required.

The highly dielectric film according to the present invention can be formed on the surface of the substrate by coating a curable organopolysiloxane composition containing at least a fluoroalkyl-group-containing organopolysiloxane described later on a film-like substrate, a tape-like substrate, or a sheet-like substrate (hereinafter, referred to as "film-like substrate"), and then curing the curable organopolysiloxane composition by heating under a predetermined temperature condition. The cured layer obtained by curing the fluoroalkyl-group-containing curable organopolysiloxane composition according to the present invention, particularly, the film-like dielectric layer is suitable to construct and use a laminated touch screen or a flat panel display.

In particular, the substrate is a planar substrate having a separation surface, and it is preferable that the curable organopolysiloxane composition containing at least the fluoroalkyl-group-containing organopolysiloxane is applied on the separation surface. Since such a substrate serves as the separator, the highly dielectric film of the present invention laminated on the substrate can be separated from the separation layer smoothly with a slight force to adhere or be bonded to targeted electronic equipment or the like, such that there is an advantage in that the highly dielectric film is excellent in handling workability.

The fluoroalkyl-group-containing organopolysiloxane cured product having the primer layer and the planarization layer described above can design a flat highly dielectric film with substantially no irregularities at a desired thickness only by controlling an application amount, and there is an advantage in that a highly dielectric film having a desired film width and length can be efficiently produced directly without performing rolling processing to be described later.

The curable organopolysiloxane composition which is cured to form the primer layer and the curable organopolysiloxane composition which is cured to form the planarization layer may be the same or different, but it is preferable to use the curable organopolysiloxane composition containing at least the fluoroalkyl-group-containing organopolysiloxane having a substantially same composition from the viewpoint of productivity. However, as the curable organopolysiloxane composition to be used for the primer layer, a composition that has a thickness of 40 $\mu$m after curing and is excellent in uniform application property onto a substrate may be selected, and as the curable organopolysiloxane forming the planarization layer, a curable organopolysiloxane composition containing at least a fluoroalkyl-group-containing organopolysiloxane having a different composition or polymer structure may be selected, and there may be more preferable embodiments of the present invention depending on the composition design of the primer layer and the composition design of the planarization layer.

Examples of the substrate may include paperboard, cardboard paper, clay coated paper, polyolefin laminated paper, particularly, polyethylene laminated paper, a synthetic resin film / sheet, natural fiber cloth, synthetic fiber cloth, artificial leather cloth, and metal foil. In particular, the synthetic resin film / sheet is preferable, and examples of the synthetic resin may include polyimide, polyethylene, polypropylene, polystyrene, polyvinyl chloride, polyvinylidene chloride, polycarbonate, polyethylene terephthalate, and nylon. In particular, when heat resistance is required, a film formed of heat-resistant synthetic resins such as polyimide, polyether ether ketone, polyethylene naphthalate (PEN), liquid crystal polyarylate, polyamide imide, and polyether sulfone is suitable. On the other hand, a transparent substrate, specifically, transparent materials such as polypropylene, polystyrene, polyvinylidene chloride, polycarbonate, polyethylene terephthalate, and PEN are suitable for usages requiring visibility such as a display device.

The substrate is preferably a film shape or a sheet shape. Although the thickness of the substrate is not particularly limited, it is usually about 5 to 300 $\mu$m. In addition, in order to improve the adhesion between a support film and a pressure-sensitive adhesive layer, the support film subjected to primer treatment, corona treatment, etching treatment, plasma treatment may be used. In addition, a surface opposite to the surface of the pressure-sensitive adhesive layer of the film-like substrate may be surface-treated such as scratch prevention, dirt prevention, fingerprint adhesion prevention, anti-glare, antireflection, antistatic, and the like.

As a coating method for a primer layer or a planarization layer on the substrate, roll coating using gravure coating, offset coating, offset gravure, offset transfer roll coater and the like, curtain coating using reverse roll coating, air knife coating, curtain flow coater and the like, comma coat, a Meyer bar, and other known methods for forming a cured layer can be used without limitation.

When the highly dielectric film of the present invention is a pressure-sensitive adhesive layer, particularly, a substantially transparent pressure-sensitive adhesive film, the cured layer is preferably handled as a laminate film adhered in a separable state on a film substrate provided with a separation layer having separation coating capability.

Manufacturing Method using Rolling Processing

The highly dielectric film of the present invention can be obtained by applying a curable organopolysiloxane composition containing at least a fluoroalkyl-group-containing organopolysiloxane onto a substrate and then performing rolling processing on the curable organopolysiloxane composition before or after curing reaction. The rolling processing can be performed on the cured or semi-cured fluoroalkyl-group-containing organopolysiloxane cured product or the fluoroalkyl-group-containing organopolysiloxane semi-cured product, but it is preferable to obtain the flat and uniform fluoroalkyl-group-containing organopolysiloxane cured product which is cured by heating and the like after the uncured curable organopolysiloxane composition is rolled. In addition, when the rolling processing is performed, it is particularly preferable to obtain the flat and uniform fluoroalkyl-group-containing organopolysiloxane cured product which is cured by heating and the like after the whole laminate in which the uncured curable organopolysiloxane composition is coated between separators having a separation layer to be described later is rolled.

The amount of the curable organopolysiloxane composition to be applied onto the substrate is not particularly limited, but it is necessary that the thickness of the film after curing is 50 $\mu$m or more, and the thickness of the film is a thickness which can be rolled.

The rolling processing can be performed by applying the curable organopolysiloxane composition onto the substrate and using a known rolling method such as roll rolling. The cured or semi-cured fluoroalkyl-group-containing organopolysiloxane cured product or the fluoroalkyl-group-containing organopolysiloxane semi-cured product is formed in a substantially sheet shape as needed, and then the rolling processing may be performed. In the highly dielectric film formed of the fluoroalkyl-group-containing organopolysiloxane cured product after the rolling processing, the thickness at the center of the film needs to be in the range of 50 to 1000 $\mu$m. In the case of the roll rolling, there is an advantage that it is possible to design a highly dielectric film having a desired thickness by adjusting the gap between the rolls.

As described above, the rolling processing is preferably performed in a state in which the curable organopolysiloxane composition is applied onto the substrate and is uncured. Specifically, the highly dielectric film of the present invention can be preferably obtained by applying the curable organopolysiloxane composition as a raw material onto the sheet-like substrate provided with the separation layer, rolling the curable organopolysiloxane composition by the roll rolling and the like, and then curing the flat curable organopolysiloxane composition by the heating or the like.

The method for coating the curable organopolysiloxane composition onto the substrate before the rolling processing, the substrate and the like are the same as above, and the fluoroalkyl-group-containing organopolysiloxane cured product having the primer layer and the planarization layer may be further subjected to the rolling processing such as the roll rolling.

Manufacturing Method Using Curing Between Separators Having Separation Layer

As described above, when a curable organopolysiloxane composition containing at least a fluoroalkyl-group-containing organopolysiloxane is applied onto a substrate having a separation layer by the conventional method, in particular, when a thickness of a film after curing is 50 $\mu$m or more, unless a primer layer is used, it tends to form a non-uniform surface with a largely depressed applied surface. However, it is possible to obtain a flat highly dielectric film by applying a substrate having a separation layer to the applied surface and sandwiching an uncured applied surface between the respective substrates (separators) to form a physically uniformed planarization layer. When this method is used, a flat highly dielectric film can be obtained without using the above-mentioned primer layer. In forming the above-mentioned planarization layer, it is preferable that a laminate obtained by applying an uncured curable organopolysiloxane composition between the separators having the separation layer is rolled by the known rolling method such as the roll rolling.

Fluoroalkyl-Group-Containing Organopolysiloxane Cured Product

The highly dielectric film of the present invention is a fluoroalkyl-group-containing organopolysiloxane cured product, and preferably is formed by curing a curable organopolysiloxane composition containing at least fluoroalkyl-group-containing organopolysiloxane in which 10 mol% or more of all substituents on a silicon atom is a fluoroalkyl group represented by $(C_pF_{2p+1})$-R- (R is an alkylene having 1 to 10 carbon atoms, and p is a number ranging from 1 to 8). More preferably, the highly dielectric film of the present invention is obtained by curing a fluoroalkyl-group-containing curable organopolysiloxane composition containing the following components (A) to (C), an optional component (D), and each component will be described below. The fluoroalkyl-group-containing curable organopolysiloxane composition contains the following components (A) to (C) and an optional solvent (D), and each component will be described first.

Component (A)

Component (A) is a main component of the curable composition, and has at least two alkenyl groups having 2 to 12 carbon atoms in a molecule, is fluoroalkyl-group-containing organopolysiloxane in which 10 mol% or more of all substituents on a silicon atom is a fluoroalkyl group represented by $(C_pF_{2p+1})$-R- (R is an alkylene group having 1 to 10 carbon atoms and p is a number ranging from 1 to 8), and an average polymerization degree is 1000 or less.

Since the component (A) has a certain amount or more of fluoroalkyl group and at least two alkenyl groups in the molecule, it is crosslinked by an addition reaction (hydrosilylation reaction) with component (B), thereby providing a cured product which has excellent formability, reaction controllability and transparency and has a relatively high relative dielectric constant. The structure thereof is not particularly limited, and it may be a resinous organopolysiloxane essentially including a linear, branched, cyclic or $R^3SiO_{3/2}$ unit (trifunctional siloxy unit) or a $SiO_2$ unit (tetrafunctional siloxy unit). In addition, it may be a mixture of one or more kinds of organopolysiloxanes having different molecular structures or average polymerization degrees. However, when it is applied as a dielectric layer, it is preferable that it does not have the trifunctional siloxy unit or the tetrafunctional siloxy unit when a high compression ratio and good recovery characteristics are realized and a low adhesive force is required. Particularly preferably, the component (A) is a linear fluoroalkyl-group-containing organopolysiloxane.

In the component (A), 10 mol% or more, preferably 20 mol% or more, or more preferably 40 mol% or more of all the substituents on the silicon atom is the fluoroalkyl group represented by $(C_pF_{2p+1})$-R- (R is an alkylene group having 1 to 10 carbon atoms and p is a number ranging from 1 to 8). If a content of the fluoroalkyl group is less than the lower limit, the relative dielectric constant of the cured product obtained by curing the curable organopolysiloxane composition is decreased, which is not suitable. When a content of a fluorine atom in the fluoroalkyl-group represented by $(C_pF_{2p+1})$-R- is high, that is, a value of p is large, for example $p \geq 4$ is satisfied and the number of carbon atoms of the alkylene group which is R is decreased, the technical effects of the present invention can be obtained even if the content of the fluoroalkyl group approaches the lower limit of the above range. In particular, the content of the fluorine atom in the component (A) is preferably 10% by mass or more. When a trifluoropropyl group is selected as the fluoroalkyl group, one of the most preferable embodiments of the present invention is that the selected fluoroalkyl group is 40 mol% or more, and particularly 50 mol% or more of all the substituents on the silicon atom in the component (A).

The fluoroalkyl group represented by $(C_pF_{2p+1})$-R- is an essential functional group in the component (A) of the present invention and is also a suitable functional group in the component (B). Such a fluoroalkyl group provides the cured product having the excellent relative dielectric constant, and each component has the fluorine atom to improve compatibility of each component, thereby providing the cured product having the excellent transparency. Specific examples of such a fluoroalkyl group may include a trifluoropropyl group, a pentafluorobutyl group, a heptafluoropentyl group, a nonafluorohexyl group, an undecafluoroheptyl group, a tridecafluorooctyl group, a pentadecafluorononyl group, and a heptadecafluorodecyl group. Among them, a group having p = 1, that is, a trifluoropropyl group is a preferable group from the viewpoint of dielectric properties, economical efficiency, manufacturing easiness and molding processability of the obtained curable organopolysiloxane composition.

The component (A) has at least two alkenyl groups having 2 to 12 carbon atoms in the molecule. From the viewpoint of the economical efficiency and reactivity, as the alkenyl group having 2 to 12 carbon atoms, a vinyl group, an allyl group, a hexenyl group or an octenyl group is preferably used, and a vinyl group or a hexenyl group is more preferably used. Other silicon atom bonding functional groups in the component (A) are not particularly limited, but may include an alkyl group having 1 to 12 carbon atoms, an aryl group having 6 to 20 carbon atoms, an aralkyl group having 7 to 20 carbon atoms, a hydroxyl group, or an alkoxy group having 1 to 6 carbon atoms. As the alkyl group having 1 to 12 carbon atoms, a methyl group is preferable in economical efficiency and heat resistance. As the aryl group having 6 to 20 carbon atoms, a phenyl group, a methylphenyl (tolyl) group and a naphthyl group are preferably used from the viewpoint of economical efficiency. As the aralkyl group having 7 to 20 carbon atoms, a benzyl group and a phenethyl group are preferably used. Further, as the alkoxy group having 1 to 6 carbon atoms, a methoxy group, an ethoxy group, and an n-propoxy group are preferably used. In the component (A), a certain amount or more of all the substituents on the silicon atom is the above-mentioned fluoroalkyl group and 2 or more alkenyl groups having 2 to 12 carbon atoms are included in a molecule, but other silicon atom bonding functional groups are preferably a methyl group, a phenyl group or a hydroxyl group, and particularly preferably selected from a methyl group and a phenyl group.

Preferably, the component (A) is one or more linear organopolysiloxanes that has a certain amount or more of fluoroalkyl groups represented by the following structural formula (I) and has at least two alkenyl groups. The cured product obtained by using the component (A) has low adhesive force, a high compression ratio, and good recovery characteristics. In addition, since the change in the physical properties is small, for example, even under low temperature of 0°C or less, when it is applied as a dielectric layer of a display device such as a touch panel, it is excellent in pressure responsiveness even under a low pressure and realize stable and high sensor sensitivity in a wide temperature range.

Structural Formula:

$$R^1R^2_2Si(OSiR^1R^2)_{e1}(OSiR^2_2)_{e2}OSiR^1R^2_2 \qquad (I)$$

In the formula, the substituent represented by $R^1$ is, identically or independently, the fluoroalkyl group or the alkenyl group having 2 to 12 carbon atoms, and specific examples thereof are the same as described above. In addition, the substituent represented by $R^2$ is, identically or independently, an alkyl group having 1 to 12 carbon atoms, an aryl group having 6 to 20 carbon atoms, an aralkyl group having 7 to 20 carbon atoms, a hydroxyl group, or an alkoxy group having 1 to 6 carbon atoms, and at least two of all $R^1$ are an alkenyl group having 2 to 12 carbon atoms. Preferably, the content of the alkenyl group having 2 to 12 carbon atoms in the component (A) may be 0.01 to 1.00% by mass and 0.02 to 0.25% by mass, and the groups other than the fluoroalkyl group and the alkenyl group having 2 to 12 carbon atoms are preferably a methyl group, a phenyl group or a hydroxyl group, and particularly preferably a methyl group or a phenyl group.

In addition, 10 mol% or more, preferably 20 mol% or more, and more preferably at least 40 mol% or more of all the substituents (R= and $R^2$) on all the silicon atoms is the above-mentioned fluoroalkyl group, and preferably a trifluoropropyl group. If the content of the fluoroalkyl group is less than the lower limit, the relative dielectric constant of the cured product obtained by curing the curable organopolysiloxane composition is decreased, which is not suitable.

In the formula, the values of e1 and e2 are the average polymerization degrees of each siloxane unit in the component (A), e1 is a positive number, e2 is 0 or a positive number, and $5 < e1 + e2 + 2 < 500$ is satisfied. These values are the average polymerization degrees, and when the component (A) is a mixture formed of two or more components, the average polymerization degree $e1 + e2 + 2$ of the component (A) as the whole mixture falls within the above range. The polymerization degree of the organopolysiloxane that is the component (A) can be determined by an integral ratio of peak intensity using $^{29}$Si NMR, and the preferable range of the average polymerization degree is the same as above.

The component (A) of the present invention may be one kind of organopolysiloxane that satisfies the above requirements, or may be a mixture of at least two kinds of organopolysiloxanes. In the case of at least two kinds of organopolysiloxanes, the average polymerization degree of the mixture may fall within the above-mentioned range, and it is more preferably that each organopolysiloxane has two or more alkenyl groups having 2 to 12 carbon atoms in a molecule and is organopolysiloxane in which 10 mol% or more of all the substituents on the silicon atom is the above-mentioned fluoroalkyl group.

In the component (A) of the present invention, the fluoroalkyl group may be at a side chain or at an end of a molecular chain, and particularly preferably is a fluoroalkyl-group-containing organopolysiloxane copolymer which has an alkenyl group having 2 to 12 carbon atoms at both ends of the molecular chain and is represented by the following Structural Formula (II).

Structural Formula:

$$R^{Vi}R^2{}_2Si(OSiR^2R^3)_{e1'}(OSiR^2{}_2)_{e1'}(OSiR^2{}_2)_{e2'}OSiR^{Vi}R^2{}_2 \qquad (II)$$

In the formula, $R^{Vi}$ is an alkenyl group having 2 to 12 carbon atoms, and the same groups as described above are exemplified.

$R^2$ is a group identical with the group, $R^3$ is a fluoroalkyl group represented by $(C_pF_{2p+1})$-R- (R is a group identical with the group and p is a number equal to the number), and the same group is exemplified. Further, in the above structure, e1' and e2' are numbers satisfying $5 < e1' + e2' + 2 < 500$ and a value of $(e1') / (e1' + e2')$ falls within a range of 0.5 to 1.0. In the above range, the condition that 10 mol% or more of all $R^{Vi}$, $R^2$ and $R^3$ is the fluoroalkyl group ($R^3$) is automatically satisfied. That is, since $e1' + e2' + 2 > 5$ and $(e1') / (e1' + e2')$ is 0.5 or more, $e1' + e2'$ is larger than 3 and e1' is a value greater than e2', and a value of $[R^3] = e1' / (2 \times e1' + 2 \times e2' + 6) \times 100$ mol% is larger than $1.5 / 12 \times 100 = 12.50$ mol%.

Preferably, $R^{Vi}$ is a vinyl group or a hexenyl group, $R^2$ is a methyl group, a phenyl group or a hydroxyl group, and the fluoroalkyl group is suitably a trifluoropropyl group.

The fact that $(e1') / (e1' + e2')$ is 0.5 or more means that the number of disiloxane units having a fluoroalkyl group represented by $OSiR^2R^3$ forming the copolymer is equal to or more than the number of disiloxane units having no fluoroalkyl group. The value of $(e1') / (e1' + e2')$ preferably falls within a range of 0.6 to 1.0, and more preferably within a range of 0.65 to 1.0. Particularly preferably, e2' is 0, and the above value is 1.0. The polymerization degree of the organopolysiloxane that is the component (A) can be determined by the integral ratio of peak intensity using $^{29}$Si NMR, and the preferable range of the average polymerization degree is the same as above.

Specific examples of the component (A) of the present invention may include a trimethylsilyl-polydimethylmethylvinylmethyltrifluoropropylsiloxane copolymer at both ends, a trimethylsilyl-polymethylvinylmethyltrifluoropropylsiloxane copolymer at both ends, a dimethylvinylsilyl-polydimethylmethylvinylmethyltrifluoropropylsiloxane copolymer at both ends, a dimethylvinylsilyl-polydimethylmethyltrifluoropropylsiloxane copolymer at both ends, a hydroxydimethylsilyl-polymethylvinylmethyltrifluoropropylsiloxane copolymer at both ends, a hydroxydimethylsilyl-polydimethylmethylvinylmethyltrifluoropropylsiloxane copolymer at both end, a dimethylphenylsilyl-polymethylvinylmethyltrifluoropropylsiloxane copolymer at both ends, a dimethylphenylsilyl-polydimethylmethylvinylmethyltrifluoropropylsiloxane copolymer at both ends, a dimethylvinylsilyl-polydimethylmethylvinylmethylphenylmethyltrifluoropropylsil oxane copolymer at both ends, a dimethylvinylsilyl-polymethylphenylmethyltrifluoropropylsiloxane copolymer at both ends, a dimethylvinylsilyl-polydimethylmethylphenylmethyltrifluoropropylsiloxane copolymer at both ends, a hydroxydimethylsilyl-polymethylvinylmethylphenylmethyltrifluoropropylsiloxan e copolymer at both ends, a hydroxydimethylsilyl-polydimethylmethylvinylmethylphenylmethyltrifluoroprop ylsiloxane copolymer at both ends, a dimethylvinylsilyl-polymethyltrifluoropropylsiloxane at both ends, and the like. The dimethylvinylsilyl-polydimethylmethyltrifluoropropylsiloxane copolymers at both ends is most preferably used.

The amount of the component (A) used in the present invention is 20 to 99% by mass, preferably 30 to 80% by mass, and more preferably 40 to 70% by mass with respect to the sum (the total is 100% by mass) of the components (A) to (C). If it is equal to or less than the upper limit of the above range, the mechanical strength of the cured product obtained by curing the present composition is sufficiently high, whereas if it is equal to more than the lower limit of the above range, the cured product serves as a low-adhesiveness elastic gel layer.

Component (B)

The component (B) is a crosslinking agent for the fluoroalkyl-group-containing curable organopolysiloxane composition according to the present invention and is organohydrogenpolysiloxane having at least two silicon-bonded hydrogen atoms in a molecule. The organohydrogenpolysiloxane may have or may not have a fluorine atom, but the organohydrogenpolysiloxane preferably has a fluorine-containing group.

A molecular structure of the organohydrogenpolysiloxane that is the component (B) is not particularly limited, and may be any of a linear shape, a cyclic shape, a resin shape, and a partially branched linear shape, and may be one having a T unit (that is, $YSiO_{3/2}$, Y may be a silicon atom-bonded hydrogen atom, a monovalent organic group (including a fluorine atom-containing organic group), a hydroxyl group or an alkoxy group) or a Q unit (that is, $SiO_{4/2}$). In addition, even viscosity is not particularly limited, and from the viewpoint of ease of handling, the viscosity at 25°C preferably falls within in a range of 1 to 100,000 mPa·s when measured using a B type viscometer in accordance with JIS K7117-1. From the viewpoint of ease of mixing with the component (A), it is preferably a liquid at room temperature, and organohydrogenpolysiloxane having the number of 2 to 300 silicon atoms is particularly preferable.

There is also no limitation on a siloxane unit having a silicon-bonded hydrogen atom, and any of an ($R_2HSiO_{1/2}$) unit, an ($RHSiO_{2/2}$) unit, and an ($HSiO_{3/2}$) unit may be used, but it is necessary to have at least two silicon-bonded hydrogen atoms in a molecule. Here, R is the same or different alkyl groups having 1 to 12 carbon atoms which can be used in the organopolysiloxane (A), an aryl group having 6 to 20 carbon atoms, an aralkyl group having 7 to 20 carbon atoms, a hydroxyl group, an alkoxy group having 1 to 6 carbon atoms, and a fluoroalkyl group represented by $(C_pF_{2p+1})$-R- (R is a group identical with the group and p is equal to the number).

From the viewpoint of affinity with the component (A) and improvement in the relative dielectric constant of the cured product obtained by curing the curable composition of the present invention, the organohydrogenpolysiloxane as the component (B) is preferably a fluorine-containing group, preferably the fluoroalkyl group, and particularly a trifluoropropyl group in a molecule. The content of the fluoroalkyl group is not particularly limited, but it is preferably 5 to 75 mol%, more preferably 5 to 70 mol%, and still more preferably 10 to 60 mol% of the fluorine atom-containing organic group among all the organic groups in one molecule.

Preferable examples of the component (B) may include resinous organopolysiloxane formed of an M unit (that is, $R^6_3SiO_{1/2}$) and a T unit ($R^6SiO_{3/2}$), linear organopolysiloxane formed of an M unit and a D unit ($R^6_2SiO_{2/2}$), resinous organopolysiloxane formed of the M unit, the D unit, and the T unit or a Q unit. Examples of the organopolysiloxane formed of the M unit and the T unit may include those in which a part or all of $R^6$ of the M unit is a hydrogen atom, and a part or all of $R^6$ of the T unit has a fluorine atom-containing organic group, for example, 3,3,3-trifluoropropyl group. Examples of the organopolysiloxane formed of the M unit and the D unit may include those in which at least a part of $R^6$ of the M unit is a hydrogen atom, and a part or all of $R^6$ of the D unit has a fluoroalkyl group, for example, 3,3,3-trifluoropropyl group. Examples of the organopolysiloxane formed of the M unit, the D unit, and the T unit may include those in which a part or all of $R^6$ of the M unit is a hydrogen atom, and a part or all of $R^1$ of the D unit and the T unit has the fluoroalkyl group, for example, 3,3,3-trifluoropropyl group.

Specific examples may include a trimethylsilyl-polydimethylmethyl hydrogen siloxane copolymer at both ends, trimethylsilyl-polymethyl hydrogen siloxane at both ends, a trimethylsilyl-polydimethylmethylhydrogen methyltrifluoropropylsiloxane copolymer at both ends, a trimethylsilyl-polymethylhydrogen methyltrifluoropropylsiloxane copolymer at both ends, a dimethylhydrogensilyl-polydimethylmethyl hydrogen siloxane copolymer at both ends, dimethylhydrogensilyl-polydimethylsiloxane at both ends, a dimethylhydrogensilyl-polydimethylmethyltrifluoropropylsiloxane copolymer at both ends, a dimethylhydrogensilyl-polymethylhydrogen methyltrifluoropropylsiloxane copolymer at both ends, a dimethylhydrogensilyl-polydimethylmethylhydrogen methyltrifluoropropylsiloxane copolymer at both ends, dimethylhydrogensilyl-polymethyltrifluoropropylsiloxane at both ends, hydroxydimethylsilyl-polymethyl hydrogen siloxane at both ends, a hydroxyldimethylsilyl-polymethylhydrogen methyltrifluoropropylsiloxane copolymer at both ends, a hydroxydimethylsilyl-polydimethylmethylhydrogen methyltrifluoropropylsiloxane copolymer at both ends, dimethylphenylsilyl-polymethyl hydrogen siloxane at both ends, a dimethylphenylsilyl-polymethylhydrogen methyltrifluoropropylsiloxane copolymer at both ends, a dimethylphenylsilyl-polydimethylmethylhydrogen methyltrifluoropropylsiloxane copolymer at both ends, a dimethylhydrogensilyl-polydimethylmethylphenylsiloxane copolymer at both ends, a dimethylhydrogensilyl-polydimethylmethylphenylmethyltrifluoropropylsiloxane copolymer at both ends, a dimethylhydrogensilyl-polymethylphenylmethyltrifluoropropylsiloxane copolymer at both ends, a hydroxyldimethylsilyl-polymethylhydrogen methylphenylsiloxane copolymer at both ends, a hydroxyldimethylsilyl-polymethylhydrogen methylphenylmethyltrifluoropropylsiloxane copolymer at both ends, a dimethyltrifluoropropylsilyl-polydimethylmethyl hydrogen siloxane copolymer at both ends, a dimethyltrifluoropropylsilyl-polymethyl hydrogen siloxane at both ends, dimethyl methyl hydrogen cyclopolysiloxane, methyl hydrogen cyclopolysiloxane, methyl hydrogen methyl trifluoropropyl cyclopolysiloxane, dimethyl methyl hydrogen methyl trifluoropropyl cyclopolysiloxane, methylphenyl methyl hydrogen methyl trifluoropropyl cyclopolysiloxane, 1,1,3,5,5-pentamethyl-3-trifluoropropyltrisiloxane, tris (dimethylsiloxysilyl) trifluoropropylsilane, polysi-loxane formed of an $(Me_3SiO_{1/2})$ unit, an $(Me_2HSiO_{1/2})$ unit and an $(SiO_{4/2})$ unit, polysiloxane formed of an $(Me_2HSiO_{1/2})$ unit and an $(SiO_{4/2})$ unit, polysiloxane formed of an $(Me_3SiO_{1/2})$ unit, an $(Me_2HSiO_{1/2})$ unit and a $(TfpSiO_{3/2})$ unit, polysiloxane formed of an $(Me_2HSiO_{1/2})$ unit and a $(TfpSiO_{3/2})$ unit, polysiloxane formed of an $(Me_3SiO_{1/2})$ unit, an $(MeHSiO_{1/2})$ unit and a $(TfpSiO_{3/2})$ unit, polysiloxane formed of an $(Me_2HSiO_{1/2})$ unit, an $(MeHSiO_{2/2})$ unit and a $(TfpSiO_{3/2})$ unit, polysiloxane formed of an $(Me_2HSiO_{1/2})$ unit, a $(TfpSiO_{3/2})$ unit, and an $(MeSiO_{3/2})$ unit, polysiloxane formed of an $(Me_2HSiO_{1/2})$ unit, a $(TfpSiO_{3/2})$ unit, and a $(PhSiO_{3/2})$ unit, polysiloxane formed of an $(Me_2HSiO_{1/2})$ unit and a $(PhSiO_{3/2})$ unit, polysiloxane formed of an $(Me_2HSiO_{1/2})$ unit, an $(TfpSiO_{3/2})$ unit, and an $(SiO_{4/2})$ unit, and the like. One of them may be used alone, or at least two of them may be used in combination. Here, Me represents a methyl group, Ph represents a phenyl group, and Tfp represents a trifluoropropyl group.

In the present invention, the preferred component (B) is organohydrogenpolysiloxane having a linear shape or a T unit, and in particular, organohydrogenpolysiloxane represented by the following average unit formula (III) or (IV) is exemplified.

$$R^2_3Si(OSiR^4R^2)_{f1}(OSiR^2_2)_{f2}OSiR^2_3 \qquad (III)$$

$$(HR^2_2SiO_{1/2})_{f3}(R^5SiO_{3/2})_{f4} \qquad (IV)$$

In the formula (III), $R^4$ is a fluoroalkyl group represented by $(C_pF_{2p+1})$-R- (R is a group identical with the group and p is a number equal to the number) or a silicon atom-bonded hydrogen atom, and as the fluoroalkyl group, the groups identical with the group is exemplified and is preferably a trifluoropropyl group. $R^2$ is a group identical to the group, and is a methyl group, a phenyl group or a hydroxyl group. In addition, in the formula (III), at least two of all $R^4$ are silicon atom-bonded hydrogen atoms, and f1 and f2 are 0 or a positive number and a number satisfying 5 < f1 + f2 < 148. More preferably, $R^2$ is a methyl group, f1 is a number in a range of 10 < f1 + f2 < 100, at least 5 mol% or more of all $R^4$ is the fluoroalkyl group, and the remaining $R^4$ is preferably a silicon atom-bonded hydrogen atom.

In the formula (IV), $R^5$ is a fluoroalkyl group represented by $(C_pF_{2p+1})$-R- (R is a group identical with the group and p is a number equal to the number), $R^2$ is a group identical with the group, f3 and f4 are positive numbers, and f3 + f4 is a number within a range in which a weight average molecular weight of the organohydrogenpolysiloxane represented by formula (IV) is 400 to 10000.

The component (B) of the present invention can be prepared by the known manufacturing method, for example, by a method including a reaction including at least a hydrolysis and a condensation reaction or a method including a ring-opening polymerization reaction on alkoxysilanes having a fluorine atom-containing organic group or a fluorine atom-non-containing organic group and / or a reactive functional group, chlorosilanes, or siloxanes under the presence or absence of an acid or basic compound. In particular, the component (B) having a fluoroalkyl group can be prepared by a method including at least a hydrolysis and a condensation reaction using alkoxysilane having a fluoroalkyl group as a raw material or a method including a ring-opening polymerization reaction.

The amount of component (B) used in the composition of the present invention is adjusted so that the amount of silicon-bonded hydrogen atoms in this component is from 0.1 to 3.0 mols with respect to 1 mol of the total amount of alkenyl groups in the component (A). In particular, when the component (A) is essentially linear, the amount of silicon atom-bonded hydrogen atoms in the component is preferably 0.1 to 1 mol with respect to 1 mol of the total amount of alkenyl groups in the component (A). If the amount of component (B) used is less than the lower limit, the curing of the composition may be insufficient. On the other hand, when the amount of component (B) used exceeds the upper limit, there is a case in which an elastic gel cannot be obtained when the composition of the present invention is cured, and there is a case in which a gel-like cured product or an elastomer-like cured product exhibiting a low adhesive force, a high compression ratio and good recovery characteristics may not be obtained. More preferably, the amount of the component (B) used is adjusted so that the amount of silicon-bonded hydrogen atoms in this component is 0.2 to 0.80 mols, preferably 0.25 to 0.75 mols, more preferably 0.35 to 0.75 mols with respect to 1 mol of the total amount of alkenyl groups in the component (A) which is essentially linear.

Component (C)

A hydrosilylation reaction catalyst which is component (C) is not limited to a specific one as long as it can promote a hydrosilylation reaction. Many metals and compounds have been known as the hydrosilylation reaction catalyst, and those appropriately selected from the metals and compounds can be used in the present invention. Specific examples of the hydrosilylation reaction catalyst may include a platinum-based catalyst, a palladium-based catalyst and a rhodium-based catalyst, and the platinum-based catalyst is preferably used. As the platinum-based catalyst, chloroplatinic acid, an alcohol solution of chloroplatinic acid, a carbonyl complex of platinum, an alkenylsiloxane complex of platinum and an olefin complex of platinum are exemplified, and in particular, since compatibility with the component (A) is good, the alkenylsiloxane complex of platinum is preferably used. In the alkenylsiloxane complex of platinum, examples of the alkenylsiloxane may include 1,3-divinyltetramethyldisiloxane and 1,1,3,3-tetravinyldimethyldisiloxane. As a catalyst for promoting the hydrosilylation reaction, a non-platinum-based metal catalyst such as iron, ruthenium, and iron / cobalt may be used.

The amount of hydrosilylation reaction catalyst used is an effective amount and is not particularly limited as long as it promotes the curing of the curable organopolysiloxane composition of the present invention. Specifically, the metal atom in the catalyst is 0.01 to 1,000 ppm in terms of mass unit with respect to the sum (the total is 100% by mass) of the components (A) to (C), and preferably, the amount of platinum metal atom in the component (C) falls within a range of 0.1 to 500 ppm. If the content of the component (C) is less than the lower limit of the above range, the curing may be insufficient, and if it exceeds the upper limit of the above range, it is uneconomical and may have an adverse effect on transparency such as coloration of the obtained cured product.

Solvent (D)

Although the fluoroalkyl-group-containing curable organopolysiloxane composition according to the present invention can be subjected to a curing reaction as it is, on the other hand, when the composition is in a solid form or in a viscous liquid form, since incorporation and handling property thereof are improved, and as a result an organic solvent can also be used as needed. In particular, when the fluoroalkyl-group-containing curable organopolysiloxane composition of the present invention is coated in the film shape, it is preferable to adjust the viscosity using a solvent so that the total viscosity falls within 100 to 50,000 mPa·s, and when it is diluted with a solvent, it can be used in the range of 0 to 2,000 parts by mass with respect to the sum (100 parts by mass) of the above-mentioned components (A) to (C). That is, in the composition of the present invention, the solvent (D) may be 0 parts by mass, which is preferable. In particular, since the fluoroalkyl-group-containing curable organopolysiloxane composition of the present invention is selected from a polymer having a low polymerization degree, there is an advantage in that it can be designed to be solvent-free and the environmental load problem and the influence of the solvent on the electronic device can be eliminated without a silicon-based solvent, an organic solvent and the like remaining in the film obtained by the curing.

A type of organic solvents used herein is not particularly limited as long as it is a compound capable of dissolving all constituent components or a part of constituent components in the composition, and organic solvents having a boiling point ranging from 80°C or more to less than 200°C are preferably used. Examples of the organic solvent may include a non-halogen solvent such as i-propyl alcohol, t-butyl alcohol, cyclohexanol, cyclohexanone, methyl ethyl ketone, methyl isobutyl ketone, toluene, xylene, mesitylene, 1,4-dioxane, dibutyl ether, anisole, 4-methylanisole, ethylbenzene, ethoxybenzene, ethylene glycol, ethylene glycol dimethyl ether, ethylene glycol diethyl ether, 2-methoxyethanol (ethylene glycol monomethyl ether), diethylene glycol dimethyl ether, diethylene glycol monomethyl ether, 1-methoxy-2-propyl acetate, 1-ethoxy-2-propyl acetate, octamethylcyclotetrasiloxane, and hexamethyldisiloxane, and a halogen-based solvent such as trifluoromethylbenzene, 1,2-bis(trifluoromethyl) benzene, 1,3-bis(trifluoromethyl) benzene, 1,4-bis(trifluoromethyl) benzene, trifluoromethyl chlorobenzene, trifluoromethylfluoro benzene, and hydrofluoro ether. These organic solvents may be used alone or two or more of these organic solvents may be mixed and used. As the content of the fluoroalkyl group in the curable composition is increased, the use ratio of the above-mentioned halogen-based solvent needs to be high.

The amount of organic solvent used herein is preferably in a range of 0 to 2,000 parts by mass, preferably in a range of 5 to 500 parts by mass, and more preferably in a range of 10 to 300 parts by mass, when the sum of the components (A) to (C) is 100 parts by mass. The amount of organic solvent is substantially 0 parts by mass depending on the usages of the highly dielectric film of the present invention, and it is preferable to be solvent-free.

The viscosity at 25°C of the fluoroalkyl-group-containing curable organopolysiloxane composition according to the present invention is not particularly limited, but it is preferably within a range of 100 to 100,000 mPa·s, more preferably within a range of 300 to 10,000 mPa·s, and particularly preferably within a range of 1,000 to 8,000 mPa·s. For the purpose of setting the preferred viscosity range, it is also possible to adjust the amount of organic solvent used.

The fluoroalkyl-group-containing curable organopolysiloxane composition according to the present invention can be added and blended with components other than the components as needed as long as it does not damage the object of the present invention, in addition to the above-mentioned components. Examples of other components may include a hydrosilylation reaction inhibitor, a release agents, an insulating additives, an adhesiveness improver, a heat resistance improver, a filler, a pigment, and other conventionally known various additives. For example, an inorganic filler may be blended for the purpose of improving the functionality such as the overall viscosity adjustment and the improvement in dielectric properties.

The hydrosilylation reaction inhibitor is blended to suppress the crosslinking reaction occurring between the component (A) and the component (B), prolong a pot life at room temperature and improve storage stability. Therefore, it is a component inevitably blended in the curable composition of the present invention for practical use.

Examples of the hydrosilylation reaction inhibitor may include an acetylene compound, an enyne compound, an organic nitrogen compound, an organic phosphorus compound, and an oxime compound. Specific examples thereof may include alkyne alcohol such as 3-methyl-1-butyne-3-ol, 3,5-dimethyl-1-hexyne-3-ol, 3-methyl-1-pentyn-3-ol, 1-ethynyl-1-cyclohexanol, and phenylbutynol; enyne compounds such as 3-methyl-3-penten-1-yne, and 3,5-dimethyl-1-hexyne-3-yne; methyl alkenyl cyclosiloxane such as 1,3,5,7-tetramethyl-1,3,5,7-tetravinylcyclotetrasiloxane and 1,3,5,7-tetramethyl-1,3,5,7-tetrahexenylcyclotetrasiloxan; and benzotriazole.

The blending amount of the hydrosilylation reaction inhibitor is an effective amount for prolonging the pot life at normal temperature of the fluoroalkyl-group-containing curable organopolysiloxane composition of the present invention and improving the storage stability. Typically, the component (A) falls within a range of 0.001 to 5% by mass, and preferably within a range of 0.01 to 2% by mass per 100% by mass, but the type of this component may be appropriately selected depending on the performance and the content of the platinum-based catalyst, the amount of alkenyl group in the component (A), the amount of silicon atom-bonded hydrogen atom in the component (B), and the like.

The film-like or sheet-like cured product obtained by curing the fluoroalkyl-group-containing curable organopolysiloxane composition according to the present invention can be suitably used for an electroactive film (dielectric layer or electrode layer) constituting a transducer, but if the releaseability of the cured layer is aggravated at the time of forming a thin film, especially when the dielectric film is manufactured at high speed, there is a case in which the dielectric film is broken due to mold separation. Further, as the dielectric layer used for a touch panel or the like, there is a case in which the reduction in adhesiveness is required to improve the sensitivity under a low pressure. The fluoroalkyl-group-containing curable organopolysiloxane composition according to the present invention can improve the manufacturing speed of the film without damaging the film, and can further improve adhesiveness by adding other releasing agents.

Examples of a releaseability improving additive (releasing agent) applicable to the fluoroalkyl-group-containing curable organopolysiloxane composition according to the present invention may include a carboxylic acid-based releasing agent, an ester-based releasing agent, an ether-based releasing agent, a ketone-based releasing agent, an alcohol-based releasing agent, and the like. One of them may be used alone, or two or more of them may be used in combination. In addition, as the releasing agent, one which does not contain a silicon atom, one which contains a silicon atom, or a mixture thereof can be used. Specific examples thereof are the same as those of Patent Literature 1 (International Publication No. 2014-105959).

A dielectric breakdown property improver is preferably an electrical insulating property improver and is preferably hydroxide or salt of aluminum or magnesium, a clay mineral, and a mixture thereof, and specifically, can be selected from the group consisting of aluminum silicate, aluminum sulfate, aluminum hydroxide, magnesium hydroxide, baked clay, montmorillonite, hydrotalcite, talc, and a mixtures thereof. In addition, the insulating property improver may be treated by the known surface treatment method. Specific examples thereof are the same as those of Patent Literature 1 (International Publication No. 2014-105959).

The adhesiveness improver is for improving the adhesion to the substrate with the fluoroalkyl-group-containing curable organopolysiloxane composition of the present invention is in contact during curing. It is an effective additive when the dielectric layer which is the cured product of the composition is not separated again. Examples of the adhesiveness improver may include organo-functional alkoxysilane compounds such as vinyltriethoxysilane, allyltrimethoxysilane, allyltriethoxysilane, 3-glycidoxypropyltrimethoxysilane, and 3-methacryloxypropyltrimethoxysilane, and a siloxane derivative thereof, particularly a chain or three-dimensional resinous siloxane derivative substituted with a fluorine-containing organic group. When the fluoroalkyl-group-containing curable organopolysiloxane composition of the present invention is required to have low adhesiveness, it is preferable not to add an adhesiveness improver.

Examples of other optional components may include an antioxidant such as a phenol type, a quinone type, an amine type, a phosphorus type, a phosphite type, a sulfur type, and a thioether type; a light stabilizer such as a triazole type and a benzophenone type; a flame retardant such as a phosphate ester type, a halogen type, a phosphorus type, and antimony type; one or more types of antistatic agents formed of a cationic surfactant, an anionic surfactant, a nonionic surfactant and the like; dye, pigment and the like.

In the composition according to the present invention, the filler may or may not be used as desired. When the filler is used, any one or both of the inorganic filler and the organic filler can be used. The kind of filler used is not particularly limited, and examples thereof may include a highly dielectric filler, a conductive filler, an insulating filler and a reinforcing filler, and one or more of these fillers can be used. In particular, the composition of the present invention can contain one or more filler selected from the group consisting of the high dielectric filler, a conductive filler, an insulating filler, and a reinforcing filler for the purpose of adjusting viscosity or providing functionality within a range in which the transparency, coatability, and handling workability are not damaged. Some or all of the fillers may be surface-treated with one or more surface treatment agents.

The filler may be one kind or two or more kinds, and the shape thereof is not particularly limited, and any shape such as a particle shape, a plate shape, a needle shape, and a fiber shape can be used. When the shape of the filler is a particle, a particle size of the filler is not particularly limited, but when it is measured by, for example, a laser light diffraction method, a volume average particle diameter thereof may fall, for example, within a range of 0.001 to 500 $\mu$m. In addition, depending on the use purpose of the filler, the volume average particle diameter of the filler may be 300 $\mu$m or less, 200 $\mu$m or less, 100 $\mu$m or less, 10 $\mu$m or less, or 0.01 $\mu$m or more, 0.1 $\mu$m or more, and 1 $\mu$m or more. When the shape of the filler is anisotropic like a plate shape, a needle shape, a fiber shape and the like, an aspect ratio of the filler can be 1.5 or more, 5 or more, or 10 or more. It is possible to manufacture a cured product having substantially high transparency, particularly a dielectric layer film by using fine particles having the volume average particle diameter of 0.01 $\mu$m or less and a maximum particle diameter of 0.02 $\mu$m or less.

The fluoroalkyl-group-containing curable organopolysiloxane composition of the present invention can be prepared by uniformly mixing the components (A) to (C) and adding other optional components as needed and uniformly mixing them. These components may be mixed at room temperature using various stirrers or kneaders, but may be mixed under heating as long as they are a combination of components not cured during the mixing.

Unless these components are not cured during the mixing, a blending order of each component is not particularly limited. When the components are not used immediately after the mixing, the components (B) and (C) are separately stored in a plurality of containers so that they do not exist in the same container and immediately before the components are used, it is preferable to mix the components within all the containers.

The curing reaction of the fluoroalkyl group-containing curable organopolysiloxane composition of the present invention is usually accomplished by heating the composition or exposing the composition to active energy rays. The curing reaction temperature by heat is not particularly limited, but it is preferably 50°C or more and 200°C or less, more preferably 60°C or more and 200°C or less, and still more preferably 80°C or more and 180°C or less. In addition, the time required for the curing reaction depends on the structures of the components (A), (B) and (C), but is usually from 1 second or more to 3 hours or less. In general, it is possible to obtain a cured product by being maintained for 10 seconds to 30 minutes within a range of 90 to 180°C.

Examples of the active energy rays that can be used for the curing reaction may include ultraviolet ray, electron ray, radiation, and the like, but the ultraviolet ray is preferable from the viewpoint of practical use. In the case of conducting the curing reaction with the ultraviolet ray, it is preferable to add a hydrosilylation reaction catalyst having high activity against the ultraviolet ray used, such as a bis(2,4-pentanedionato) platinum complex and a (methylcyclopentadienyl) trimethyl platinum complex. A high-pressure mercury lamp, a medium-pressure mercury lamp, a Xe-Hg lamp, a deep UV lamp and the like are suitable as the ultraviolet ray generating source, and an irradiation dose at that time is preferably 100 to 8,000 mJ / cm$^2$.

The cured product of the present invention is obtained by curing the fluoroalkyl-group-containing curable organopolysiloxane composition. The shape of the cured product is not particularly limited, and examples of the shape may include a sheet shape, a film shape, and a tape shape. In particular, the above-mentioned fluoroalkyl-group-containing curable organopolysiloxane composition has a high curing rate, good processability for manufacturing a molded article such as a film, and can efficiently produce a cured product having a desired thickness and shape.

The above-mentioned cured product is a gel or an elastomer having a small adhesive force, an excellent balance between elasticity and viscosity, and when it is used for an intermediate layer between substrates due to a high relative dielectric constant, a high compression ratio, and recovery characteristics, it has remarkable physical properties that it is excellent in pressure responsiveness and maintains the properties over a long period of time.

Use as Dielectric Layer

In particular, the highly dielectric film of the present invention can be used as a substantially transparent pressure-sensitive adhesive layer.

The cured product obtained by curing the fluoroalkyl-group-containing curable organopolysiloxane composition of the present invention is useful as an electronic material, a member (including members for a sensor, a speaker, an actuator, and a generator) for a display device or a member for a transducer, and a suitable usage of the highly dielectric film is an electronic component or a member of a display device. In particular, a transparent highly dielectric film is suitable as a display panel or a member for a display, and is particularly useful for a so-called touch panel which can operate a device, in particular, an electronic device by touching a screen with a fingertip or the like.

Display Panel or Member for Display

The highly dielectric film of the present invention can be used for the construction and use of a laminated touch screen or a flat panel display and as a specific use method thereof, the known use method for the dielectric layer or the pressure-sensitive adhesive layer can be used without particular limitation.

For example, the highly dielectric film of the present invention is an optically transparent silicone layer disclosed in Jpn. PCT National Publication No. 2014-522436 or Jpn. PCT National Publication No. 2013-512326 and the like and can be used to manufacture a display device such as a touch panel. For example, the highly dielectric film of the present invention can also be used for adhesiveness usages, and can be used without particular limitation is an adhesive layer or an adhesive film described in Jpn. PCT National Publication No. 2013-512326.

As one example, the touch panel according to the present invention may be a touch panel that includes a substrate such as a conductive plastic film having a conductive layer formed on one surface thereof, and the highly dielectric film of the present invention attached to a side on which the conductive layer is formed or a surface opposite thereto. The substrate is preferably a sheet-like or film-like substrate, and a resin film or a glass plate is exemplified. In addition, the conductive plastic film may be a resin film or a glass plate having an ITO layer formed on one surface thereof, in particular, a polyethylene terephthalate film. These are disclosed in the above-mentioned Jpn. PCT National Publication No. 2013-512326 and the like. From the viewpoint of improving the adhesiveness of the highly dielectric film of the present invention, it is particularly preferable to perform primer treatment on these substrates using the adhesiveness improver (siloxane derivative and the like). In addition, it is also possible to improve the adhesiveness by activating the surface of the highly dielectric film. At that time, the known surface treatment methods such as plasma treatment and corona discharge treatment can be used for the film.

In addition, the highly dielectric film of the present invention may be used as an adhesive film for a polarizing plate used for manufacturing a display device such as a touch panel, and may be used as a pressure-sensitive adhesive film used for adhering between the touch panel described in Jpn. Pat. Appln. KOKAI Publication No. 2013-065009 and a display module.

Industrial Applicability

The highly dielectric film of the present invention is used without any limitation other than those disclosed above, and the highly dielectric film of the present invention can be used for a television receiver, a computer monitor, a monitor for a portable information terminal, a monitor for surveillance, a video camera, a digital camera, a cell phone, personal digital assistants, a display for an instrument panel such as automobiles, a display for an instrument panel of various equipments / devices / equipment, various flat panel displays (FPDs) for displaying characters or symbols and images such as an automatic ticket vending machine and an automatic teller machine. The highly dielectric film can be applied to, as devices, display devices such as a CRT display, a liquid crystal display, a plasma display, an organic EL display, an inorganic EL display, an LED display, a surface electrolytic display (SED), and a field emission display (FED), or a touch panel using these devices.

Example

Hereinafter, the present invention will be described with reference to examples, but the present invention is not limited by these examples. In the following examples, the following compounds and substrate films were used. In Tables 1 and 2, each value of each component represent % by mass.

Component (a1): A vinyldimethylsiloxy group capped at both ends, and a 3,3,3-trifluoropropylmethylsiloxane-dimethylsiloxane copolymer (siloxane polymerization degree: 228, the number of 3,3,3-trifluoropropylmethylsiloxane units: 182, the number of dimethylsiloxane units: 46, the content of fluoroalkyl group: 39 mol%). The viscosity measured by an E type viscometer at 25° is about 10,000 mPa·s.

Component (a2): A vinyldimethylsiloxy group capped at both ends, and a 3,3,3-trifluoropropylmethylsiloxane polymer (siloxane polymerization degree: 182, the content of fluoroalkyl group: 49 mol%). The viscosity measured by the E type viscometer at 25° is about 8,500 mPa·s.

Component (a3): A vinyldimethylsiloxy group capped at both ends, and a 3,3,3-trifluoropropylmethyl-dimethylsiloxane copolymer (siloxane polymerization degree: 275, the number of 3,3,3-trifluoropropylmethylsiloxane units: 220, the number of dimethylsiloxane units: 55, the content of fluoroalkyl group: 40 mol%). The viscosity measured with the E type viscometer at 25° is about 15,200 mPa·s.

Component (a-T): A trimethylsiloxane unit ($M^m$), a vinyldimethylsiloxane unit ($M^V$), a dimethylsiloxane unit ($D^m$), a 3,3,3-trifluoropropylmethylsiloxane unit ($D^F$), and a methylsiloxane unit ($T^m$) (the content of fluoroalkyl group: 38 mol% at each molar ratio of 4.8, 80, 306, and 5.7 with respect to the $M^m$ unit 1; $M^m_{1.0}M^V_{4.8}D^m_{80}D^F_{306}T^m_{5.7}$). The viscosity measured with the E type viscometer at 25° is about 12,300 mPa·s.

Component (B1): $M^H_{1.3}T^{F3Pr}$(Mw = 1.11 × $10^3$) formed of dimethylhydrosiloxysiloxane unit ($M^H$) and 3,3,3-trifluoropropylsiloxane unit ($T^{F3Pr}$). The weight average molecular weight of the component (B1) is a weight average molecular weight in terms of polystyrene measured by gel permeation chromatography (GPC) using tetrahydrofuran (THF) as a solvent. Component (B2): A dimethylhydrosiloxy group capped at both ends, and a 3,3,3-trifluoropropylmethyl-dimethylsiloxane copolymer (siloxane polymerization degree: 48, the number of 3,3,3-trifluoropropylmethylsiloxane units: 35, the number of dimethylsiloxane units: 13, the content of fluoroalkyl group: 34 mol%).

Component (C1): Platinum-dimethylvinylsiloxy group capped at both ends, and a 3,3,3-trifluoropropylmethylsiloxane complex (siloxane polymerization degree: 3, about 0.5% by weight at platinum concentration).

<Hydrosilylation Reaction Inhibitor>

Component (D1): 3-Methyl-1-butyne-3-ol

<Film Substrate>

The following polyethylene terephthalate (PET) film was used as a substrate.

Substrate (E1) PET: FSB6 (Manufactured by Nippa, thickness: 50 $\mu$m)
Substrate (E2) PET: FSC6 (Manufactured by Nippa, thickness: 50 $\mu$m)
Substrate (E3) PET: Biwakoat (manufactured by Takara Incorporation, thickness 50 $\mu$m)
Substrate (E4) PET: MRV-50 (manufactured by Mitsubishi Plastics Inc., thickness: 50 $\mu$m)

In the following Examples 1-1 to 1-4, about 0.7 mol of silicon-bonded hydrogen atom (Si-H) of the component (B1) per 1 mol of the vinyl group of the component (a1) was used. In Example 2, about 0.5 mol of silicon-bonded hydrogen atom (Si-H) of the component (B1) per 1 mol of the vinyl group of the component (a1) was used. In Example 4, about 1 mol of silicon-bonded hydrogen atom (Si-H) of the components (B1) and (B2) per 1 mol of the vinyl group of the component (a-T) was used.

<Measurement of Relative Dielectric Constant>

The relative dielectric constant was measured using LCR 6530P manufactured by Wayne Kerr Electronics Ltd. For the measurement, a sample cured into a film shape of about 1.5 to 2.0 mm in thickness was used on the substrate film PET (FL50-3, manufactured by JTEC). For Examples 1-1 to 1-4 and 2, it was cured by being heated at 80°C for 15 minutes and then heating at 150°C for 15 minutes. For Examples 3 and 4, it was cured by being heated at 110°C for 10 minutes.

The value of the relative dielectric constant was 6 in Examples 1-1 to 1-4, 3 and 4 at room temperature and a frequency of 1 kHz, and was 7 in Example 2.

<Transparency>

When no haze was visually observed on the cured product sheet, it was evaluated as "transparency". In all the examples (1-1 to 1-4, 3 and 4), all the cured products were transparent.

<Measurement of Compression Performance>

On the PET substrate (thickness: 50 $\mu$m, registered trademark Lumirror S10 manufactured by Toray Industries, Inc.), the amount of a liquid material was adjusted so that the thickness of the cured product was about 300 $\mu$m and the liquid material was applied, and then cured under the same conditions as above. Thereafter, a sample (hereinafter referred to as "film sample") in which a cured film was sandwiched between PET films was manufactured by further laminating the same kind of PET substrate (registered trademark Lumirror S10) on the cured product. The measurement was performed at room temperature using Texture Analyzer TA.XT Plus (manufactured by EKO Instruments). The flat probe (6 mm diameter) was lowered at a rate of 0.17 mm per second to remove the compressive force after reaching a maximum compressive force of 5 N. The measurement was performed eight times in total. Based on the thickness (T0) of the initial film sample and the thickness (T1) after the compression, the compression ratio was measured according to the following formula.

$$\text{Compression ratio (\%)} = \{(T0 - T1) / T0\} \times 100$$

Further, the thickness (T2) of the film sample after returning the probe to its original position at a speed of 0.17 mm per second was measured and the results obtained by being measured as the compressive residual strain according to the following equation are shown in Table 1 and Example 3.

$$\text{Compression residual strain (\%)} = \{(T0 - T2) / T0\} \times 100$$

<Measurement of Dynamic Viscoelasticity>

For dynamic viscoelasticity measurement, MCR302 manufactured by Anton Paar Ltd. was used. The curable organopolysiloxane composition of the present invention was cured under the same conditions as above. Thereafter, a disk-like sample having a thickness of about 1.5 mm and a diameter of 8 mm was prepared and measured by raising the temperature at a rate of 3° per minute from -80° or -70° to 150° using a parallel plate method. At this time, the shear storage elastic modulus at 23°C is shown in Table 1 and Example 3 under the condition of a frequency of 1 Hz and a strain of 0.2%.

Example

<Single-sided Coating and Curing>

Examples 1-1 to 1-4 were carried out as follows. Using an automatic coating machine (PI-1210, manufactured by Tester Sangyo Co., Ltd.), the liquid material shown in Table 1 was applied as a primer layer on the various film substrates so that the thickness of the cured product was about 20 $\mu$m. Thereafter, it was cured by heating at 130°C for 5 minutes, and the substrate film FL2-01 (manufactured by Takara Incorporation, thickness 75 $\mu$m) was laminated. The thickness of each primer layer was measured with a film thickness gauge. Table 1 shows the average value of the thickness measured at arbitrary five or more places of each primer layer. Next, FL2-01 was peeled off, the liquid material shown in Table 1 was further applied so that the film-like cured product had a thickness of about 280 $\mu$m, and then cured at 130°C for 5 minutes. Finally, the thickness of the film-like cured product was made to have a thickness of about 300 $\mu$m in total. Table 1 shows an average value of thicknesses measured at arbitrary five or more positions in an end part and a central part of the film-like cured product obtained. In addition, Table 1 shows a ratio (F%) of a thickness difference between the end part and the central part with respect to the thickness of the central part which is calculated by the following formula. It is to be noted that the lower the F%, the more uniform the thickness of the film-like cured product.

$$F\% = \{(\text{thickness of end part - thickness of central part}) / \text{thickness of central part}\} \times 100$$

Examples 2 and 4 were the same as Example 1-1 except that the curing conditions were set at 110°C for 10 minutes.

Comparative Example

<Single-sided Coating and Curing>

Comparative Examples were performed in the same manner as the corresponding Examples except that the liquid material shown in Table 2 is applied on various film substrates so that the thickness of the cured product is about 300 $\mu$m. Table 2 shows the values of the thicknesses of the end part and the central part of the obtained cured product which are measured by a film thickness meter. In addition, Table 2 shows the ratio (F%) of the thickness difference between the end part and the central part with respect to the thickness of the central part. In Comparative Example 2, when no primer was used, it could not be applied or cured at the above-mentioned thickness.

Table 1

| Example No. | 1-1 | 1-2 | 1-3 | 1-4 | 2 | 4 |
|---|---|---|---|---|---|---|
| Component (a1) | 99.08 | 99.08 | 99.08 | 99.08 | | |
| Component (a2) | | | | | 99.26 | |
| Component (a-T) | | | | | | 80.72 |
| Component (B1) | 0.77 | 0.77 | 0.77 | 0.77 | 0.66 | 0.19 |
| Component (B2) | | | | | | 19.48 |

(continued)

| Example No. | 1-1 | 1-2 | 1-3 | 1-4 | 2 | 4 |
|---|---|---|---|---|---|---|
| Component (C1) | 0.07 | 0.07 | 0.07 | 0.07 | 0.08 | 0.06 |
| Component (D1) | 0.08 | 0.08 | 0.08 | 0.08 | | |
| Substrate (E) | E1 | E2 | E3 | E4 | E1 | E2 |
| Primer thickness ($\mu$m) | 20 | 19 | 19 | 17 | 20 | 18 |
| Thickness of central part of cured product ($\mu$m) | 287 | 284 | 297 | 289 | 305 | 298 |
| Thickness of end part of cured product ($\mu$m) | 296 | 293 | 300 | 294 | 302 | 302 |
| F (%) (absolute value) | 3 | 3 | 1 | 2 | 1 | 1 |
| Relative Dielectric Constant | 6 | | | | 7 | 6 |
| Compression ratio (%) | 20 | | | | 17 | |
| Compression residual strain (%) | 0.1 | | | | 0 | |
| Shear storage elastic modulus (Pa) | $4.2 \times 10^3$ | | | | $1.7 \times 10^4$ | $8.0 \times 10^3$ |

Table 2

| Comparative Example No. | 1-1 | 1-2 | 1-3 | 1-4 | 2* | 4 |
|---|---|---|---|---|---|---|
| Component (a1) | 99.08 | 99.08 | 99.08 | 99.08 | | |
| Component (a2) | | | | | 99.26 | |
| Component (a-T) | | | | | | 80.72 |
| Component (B1) | 0.77 | 0.77 | 0.77 | 0.77 | 0.66 | 0.19 |
| Component (B2) | | | | | | 19.48 |
| Component (C1) | 0.07 | 0.07 | 0.07 | 0.07 | 0.08 | 0.06 |
| Component (D1) | 0.08 | 0.08 | 0.08 | 0.08 | | |
| Substrate (E) | E1 | E2 | E3 | E4 | E1 | E2 |
| Primer layer ($\mu$m) | 0 | 0 | 0 | 0 | 0 | 0 |
| Thickness of central part of cured product ($\mu$m) | 319 | 305 | 315 | 303 | X | 312 |
| Thickness of end part of cured product ($\mu$m) | 362 | 354 | 360 | 343 | X | 395 |
| F (%) (absolute value) | 13 | 16 | 14 | 13 | X | 26 |
| * It was not possible to perform the curing at the designed film thickness. | | | | | | |

Example 3

A curable organopolysiloxane composition including 99.43 parts by mass of the component (a3), 0.49 parts by mass of the component (B1), and 0.080 parts by mass of the component (C1) was used. It is to be noted that the amount of silicon atom-bonded hydrogen atoms (Si-H) per 1 mol of vinyl group in the composition is about 0.5 mol. It was prepared under the same conditions as in the above Examples 2 and 4, and each of the compression ratio and the compressive residual strain of the film measured was 20% and 0.6%. In addition, the shear storage elastic modulus measured under the same conditions as above was $8.0 \times 10^3$ Pa. The value of the relative dielectric constant of the cured product was 6 at room temperature and frequency of 1 kHz.

The above-mentioned liquid curable organopolysiloxane composition was applied and sandwiched between polyether sulfone resin films having a thickness of 50 $\mu$m, rolled by passing through two rolls having clearance adjusted to 175 $\mu$m and made of stainless steel, and then cured by being heated for about 3 minutes by a hot air circulation oven of 110°C. Each of the thicknesses of the central part and the end part of the obtained cured product were 132 $\mu$m and 134 $\mu$m and the thickness difference F% between the end part and the central part with respect to the thickness of the central part was about 1.5%, so that the flat film-like cured product was obtained.

Reference Example

For reference purposes, in Table 3, examples of the composition of the film-like cured product in the present invention are shown using the following compounds.

Component (a4): A vinyldimethylsiloxy group capped at both ends, and a 3,3,3-trifluoropropylmethylsiloxane-dimethylsiloxane copolymer (siloxane polymerization degree: 84, the number of 3,3,3-trifluoropropylmethylsiloxane units: 66, the number of dimethylsiloxane units: 18, the content of fluoroalkyl group: 38 mol%). The viscosity measured with the E type viscometer at 25° is about 1,220 mPa·s.

Component (a5): A vinyldimethylsiloxy group capped at both ends, and a 3,3,3-trifluoropropylmethylsiloxane-dimethylsiloxane copolymer (siloxane polymerization degree: 145, the number of 3,3,3-trifluoropropylmethylsiloxane units: 115, the number of dimethylsiloxane units: 30, the content of fluoroalkyl group: 39 mol%). The viscosity measured with the E type viscometer at 25° is about 2,960 mPa·s.

Component (a6): A vinyldimethylsiloxy group capped at both ends, and a 3,3,3-trifluoropropylmethylsiloxane-dimethylsiloxane copolymer (siloxane polymerization degree: 177, the number of 3,3,3-trifluoropropylmethylsiloxane units: 142, the number of dimethylsiloxane units: 35, the content of fluoroalkyl group: 39 mol%). The viscosity measured with the E type viscometer at 25° is about 4,800 mPa·s.

Component (a7): A vinyldimethylsiloxy group capped at both ends, and a 3,3,3-trifluoropropylmethylsiloxane-dimethylsiloxane copolymer (siloxane polymerization degree: 220, the number of 3,3,3-trifluoropropylmethylsiloxane units: 178, the number of dimethylsiloxane units: 42, the content of fluoroalkyl group: 40 mol%). The viscosity measured with the E type viscometer at 25° is about 10,000 mPa·s.

Component (a8): A vinyldimethylsiloxy group capped at both ends, and a 3,3,3-trifluoropropylmethylsiloxane-dimethylsiloxane copolymer (siloxane polymerization degree: 233, the number of 3,3,3-trifluoropropylmethylsiloxane units: 184, the number of dimethylsiloxane units: 49, the content of fluoroalkyl group: 39 mol%). The viscosity measured with the E type viscometer at 25° is about 14,000 mPa·s.

Component (a9): A vinyldimethylsiloxy group capped at both ends, and a 3,3,3-trifluoropropylmethylsiloxane-dimethylsiloxane copolymer (siloxane polymerization degree: 216, the number of 3,3,3-trifluoropropylmethylsiloxane units: 173, the number of dimethylsiloxane units: 43, the content of fluoroalkyl group: 39 mol%). The viscosity measured with the E type viscometer at 25° is about 10,000 mPa·s.

Component (a10): A vinyldimethylsiloxy group capped at both ends, and a 3,3,3-trifluoropropylmethylsiloxane-dimethylsiloxane copolymer (siloxane polymerization degree: 236, the number of 3,3,3-trifluoropropylmethylsiloxane units: 192, the number of dimethylsiloxane units: 44, the content of fluoroalkyl group: 40 mol%). The viscosity measured with the E type viscometer at 25° is about 12,500 mPa·s.

Component (a11): A vinyldimethylsiloxy group capped at both ends, and a 3,3,3-trifluoropropylmethylsiloxane-dimethylsiloxane copolymer (siloxane polymerization degree: 277, the number of 3,3,3-trifluoropropylmethylsiloxane units: 225, the number of dimethylsiloxane units: 52, the content of fluoroalkyl group: 40 mol%). The viscosity measured with the E type viscometer at 25° is about 16,000 mPa·s.

Component (a12): A vinyldimethylsiloxy group capped at both ends, and a 3,3,3-trifluoropropylmethylsiloxane-dimethylsiloxane copolymer (siloxane polymerization degree: 228, the number of 3,3,3-trifluoropropylmethylsiloxane units: 182, the number of dimethylsiloxane units: 46, the content of fluoroalkyl group: 39 mol%). The viscosity measured with the E type viscometer at 25° is about 11,000 mPa·s.

The film-like cured product was prepared in an amount so that the silicon-bonded hydrogen atoms (Si-H) of the component (B1) were about 0.5 mol per 1 mol of the vinyl group of the components (a4) to (a12). The curing was performed under any of the following conditions.

Curing Conditions

Condition 1: After heating at 80°C for 15 minutes, further heating at 150°C for 15 minutes.
Condition 2: Heating at 130°C for 5 minutes.
Condition 3: Heating at 130°C for 20 minutes.

The relative dielectric constant and the transparency of the obtained film-like cured products were evaluated by the above-mentioned method, the relative dielectric constant was 6, and all of them were transparent. In addition, the adhesive force and the compression performance were measured by the following method.

Measuring Method for Physical Properties of Obtained Material

1. Measurement of adhesive force

A liquid material was applied onto a PET substrate (thickness: 50 $\mu$m, Lumirror S10, manufactured by Toray Industries, Inc.) so that the thickness of the cured product was about 100 $\mu$m, and the film-like cured product was prepared under any one of the above-mentioned curing conditions 1 to 3. The Lumirror S10 was laminated on the obtained film-like cured product to manufacture a test piece. The measurement was performed in an environment of 23°C and 50% humidity, and the results performed at a speed of 300 mm / min and 180° peel (RTC-1210, manufactured by ORIENTEC Co., Ltd.) are shown in Table 3.

<Measurement of Compression Performance>

It was performed under the same conditions as in the Examples.

Table 3

| Composition Example | 1 | 2 | 3 | 4 | 5 |
|---|---|---|---|---|---|
| Component (a4) | 98.31 | | | | |
| Component (a5) | | 98.94 | | | |
| Component (a6) | | | 99.10 | | |
| Component (a7) | | | | 99.24 | |
| Component (a8) | | | | | 99.34 |
| Component (a9) | | | | | |
| Component (a10) | | | | | |
| Component (a11) | | | | | |
| Component (a12) | | | | | |
| Component (B1) | 1.54 | 0.91 | 0.75 | 0.60 | 0.58 |
| Component (C1) | 0.08 | 0.08 | 0.08 | 0.08 | 0.08 |
| Component (D1) | 0.08 | 0.07 | 0.07 | 0.08 | |
| Curing Condition | 1 | 1 | 1 | 1 | 2 |
| Adhesive force (N/m) | 6 | 12 | 12 | 19 | 13 |
| Compression ratio (%) | 20 | 22 | 23 | 25 | 21 |
| Compression residual strain (%) | 0 | 0.1 | 2 | 4 | 3 |
| Shear storage elastic modulus (Pa) | $4.5 \times 10^3$ | $2.5 \times 10^3$ | $2.3 \times 10^3$ | $1.4 \times 10^3$ | $4.6 \times 10^3$ |

Table 4

| Composition Example | 6 | 7 | 8 | 9 |
|---|---|---|---|---|
| Component (a4) | | | | |
| Component (a5) | | | | |
| Component (a6) | | | | |
| Component (a7) | | | | |
| Component (a8) | | | | |
| Component (a9) | 99.30 | | | |

(continued)

| Composition Example | 6 | 7 | 8 | 9 |
|---|---|---|---|---|
| Component (a10) | | 99.35 | | |
| Component (a11) | | | 99.48 | |
| Component (a12) | | | | 99.38 |
| Component (B1) | 0.62 | 0.57 | 0.48 | 0.58 |
| Component (C1) | 0.08 | 0.08 | 0.04 | 0.04 |
| Component (D1) | | | | |
| Curing Condition | 2 | 1 | 1 | 3 |
| Adhesive force (N/m) | 10 | 20 | 27 | 17 |
| Compression ratio (%) | 26 | 21 | 21 | 23 |
| Compression residual strain (%) | 4 | 1 | 2 | 2 |
| Shear storage elastic modulus (Pa) | $1.9 \times 10^3$ | $5.4 \times 10^3$ | $5.0 \times 10^3$ | $2.8 \times 10^3$ |

The film-like cured products according to Composition Examples 1 to 9 can form the substantially flat highly dielectric film by the methods according to Examples 1-1 to 1-4, Example 2, Example 3 and Example 4.

## Claims

1. A highly dielectric film formed of a fluoroalkyl-group-containing organopolysiloxane cured product, wherein in a width direction of the film, a difference between a thickness at an end of the film and a thickness at a center of the film is 5.0% or less, and the thickness at the center of the film falls within a range of 50 to 1000 $\mu$m.

2. The highly dielectric film formed of a fluoroalkyl-group-containing organopolysiloxane cured product according to claim 1, wherein the width of the film is 30 mm or more, an area of the film is 900 mm$^2$ or more, and a relative dielectric constant is 4 or more at 1 kHz and 25°C.

3. The highly dielectric film formed of a fluoroalkyl-group-containing organopolysiloxane cured product according to claim 1 or 2, wherein the highly dielectric film is substantially transparent and the center of the film has a thickness ranging from 100 to 900 $\mu$m.

4. The highly dielectric film formed of a fluoroalkyl-group-containing organopolysiloxane cured product according to any one of claims 1 to 3, wherein
a shear storage elastic modulus falls within a range of $10^3$ to $10^5$ Pa at 23°C.

5. The highly dielectric film formed of a fluoroalkyl-group-containing organopolysiloxane cured product according to any one of claims 1 to 4, wherein
the highly dielectric film includes a primer layer and a planarization layer laminated on the primer layer.

6. The highly dielectric film formed of a fluoroalkyl-group-containing organopolysiloxane cured product according to any one of claims 1 to 5, wherein the highly dielectric film includes a primer layer having a thickness of 5 to 40 $\mu$m and a planarization layer having a thickness of 10 to 800 $\mu$m laminated on the primer layer, and both the primer layer and the planarization layer are the fluoroalkyl-group-containing organopolysiloxane cured product.

7. The highly dielectric film formed of a fluoroalkyl-group-containing organopolysiloxane cured product according to any one of claims 1 to 6, wherein
the highly dielectric film is rolled.

8. The highly dielectric film formed of a fluoroalkyl-group-containing organopolysiloxane cured product according to any one of claims 1 to 7, wherein

the highly dielectric film has a planarization layer formed by being cured between separators having a separation layer.

9. The highly dielectric film formed of a fluoroalkyl-group-containing organopolysiloxane cured product according to any one of claims 1 to 8, wherein
   the highly dielectric film is formed by curing a curable organopolysiloxane composition containing at least fluoroalkyl-group-containing organopolysiloxane in which 10 mol% or more of all substituents on a silicon atom is a fluoroalkyl group represented by $(C_pF_{2p+1})$-R- (R is an alkylene having 1 to 10 carbon atoms, p is a number ranging from 1 to 8).

10. The highly dielectric film formed of a fluoroalkyl-group-containing organopolysiloxane cured product according to any one of claims 1 to 9, wherein the highly dielectric film is formed by curing a fluoroalkyl-group-containing curable organopolysiloxane composition that contains

    (A) fluoroalkyl-group-containing organopolysiloxane represented by the following structural formula (I):

    $$R^1R^2_2Si(OSiR^1R^2)_{e1}(OSiR^2_2)_{e2}OSiR^1R^2_2 \qquad (I)$$

    {wherein $R^1$ is a fluoroalkyl group represented by $(C_pF_{2p+1})$-R- (R is a group identical with the group and p is a number ranging from 1 to 8) or an alkenyl group having 2 to 12 carbon atoms, $R^2$ is, identically or independently, an alkyl group having 1 to 12 carbon atoms, an aryl group having 6 to 20 carbon atoms, an aralkyl group having 7 to 20 carbon atoms, a hydroxyl group, or an alkoxy group having 1 to 6 carbon atoms, and at least two of all $R^1$ are an alkenyl group having 2 to 12 carbon atoms, 10 mol% or more of all $R^1$ and $R^2$ is the fluoroalkyl-group, e1 is a positive number, e2 is 0 or a positive number and a number satisfying 5 < e1 + e2 + 2 < 500.}
    (B) organohydrogenpolysiloxane having at least two silicon-bonded hydrogen atoms in a molecule which is adjusted so that the silicon-bonded hydrogen atom in this component is 0.1 to 1.0 mol with respect to 1 mol of a total amount of the alkenyl group of the component (A),
    (C) an effective amount of a hydrosilylation reaction catalyst, and
    (D) a solvent of 0 to 2000 parts by mass with respect to 100 parts by mass of a sum of the components (A) to (C).

11. The highly dielectric film formed of a fluoroalkyl-group-containing organopolysiloxane cured product according to claim 10, wherein the (A) contains fluoroalkyl-group-containing organopolysiloxane represented by the following average structural formula (II):

    $$R^{Vi}R^2_2Si(OSiR^2R^3)_{e1'}(OSiR^2_2)_{e2'}OSiR^{Vi}R^2_2 \qquad (II)$$

    {wherein $R^{Vi}$ is an alkenyl group having 2 to 12 carbon atoms, $R^2$ is a group identical with the group, $R^3$ is a fluoroalkyl group represented by $(C_pF_{2p+1})$-R- (R is a group identical with the group, p is a number equal to the number), e1' and e2' are a number satisfying 5 < e1' + e2' + 2 < 500, and a value of (e1') / (e1' + e2') falls within a range from 0.5 to 1.0, e2' is 0 or a positive number}.

12. The highly dielectric film formed of a fluoroalkyl-group-containing organopolysiloxane cured product according to claim 10, wherein the component (B) is an organohydrogenpolysiloxane having a fluoroalkyl group represented by $(C_pF_{2p+1})$-R-(R is R is a group identical with the group and p is a number equal to the number).

13. A use as an electronic material or a member for a display device of the highly dielectric film formed of a fluoroalkyl-group-containing organopolysiloxane cured product according to any one of claims 1 to 12.

14. A laminate having a structure in which the highly dielectric film formed of a fluoroalkyl-group-containing organopolysiloxane cured product according to any one of claims 1 to 12 is laminated on a sheet-like substrate provided with a separation layer.

15. An electronic component or a display device having the highly dielectric film formed of a fluoroalkyl-group-containing organopolysiloxane cured product according to any one of claims 1 to 12.

16. A touch panel having the highly dielectric film formed of a fluoroalkyl-group-containing organopolysiloxane cured product according to any one of claims 1 to 12 which is attached to a substrate having a conductive layer provided on one surface thereof and the conductive layer of the substrate or a surface opposite thereto.

17. A manufacturing method for the highly dielectric film formed of a fluoroalkyl-group-containing organopolysiloxane cured product according to any one of claims 1 to 12, the manufacturing method comprising:

> process (I): a process of obtaining a primer layer by applying a curable organopolysiloxane composition containing at least fluoroalkyl-group-containing organopolysiloxane onto a substrate and curing the curable organopolysiloxane so that a thickness after the curing becomes 40 $\mu$m or less, and
>
> process (II): after the process (I), a process of obtaining a planarization layer by applying the curable organopolysiloxane composition containing at least the fluoroalkyl-group-containing organopolysiloxane onto the primer layer and curing the curable organopolysiloxane composition so that a thickness at a center of the film of the whole highly dielectric film after the curing becomes 50 to 1000 $\mu$m.

18. The manufacturing method for the highly dielectric film formed of a fluoroalkyl-group-containing organopolysiloxane cured product according to claim 17, wherein in the process (I), the substrate is a planar substrate having a separation surface, and the curable organopolysiloxane composition containing at least the fluoroalkyl-group-containing organopolysiloxane is applied onto the separation surface.

19. The manufacturing method for the highly dielectric film formed of a fluoroalkyl-group-containing organopolysiloxane cured product according to any one of claims 1 to 12, wherein after the curable organopolysiloxane composition containing at least the fluoroalkyl-group-containing organopolysiloxane is applied onto the substrate, a rolling process is performed before or after the curing.

20. The manufacturing method for the highly dielectric film formed of a fluoroalkyl-group-containing organopolysiloxane cured product according to any one of claims 1 to 12, wherein the curable organopolysiloxane composition containing at least the fluoroalkyl-group-containing organopolysiloxane is cured while being sandwiched between separators having a separation layer.

## INTERNATIONAL SEARCH REPORT

International application No.

PCT/JP2017/015028

A. CLASSIFICATION OF SUBJECT MATTER
*C08J5/18*(2006.01)i, *B32B27/00*(2006.01)i, *H01B3/46*(2006.01)i

According to International Patent Classification (IPC) or to both national classification and IPC

B. FIELDS SEARCHED

Minimum documentation searched (classification system followed by classification symbols)
C08J5/00-C08J5/02, C08J5/12-C08J5/22, B32B1/00-B32B43/00, H01B3/46

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 8-506841 A (Bausch & Lomb Inc.), | 1-3,8,20 |
| A | 23 July 1996 (23.07.1996), | 4-7,9-19 |
| | claims; page 14, lines 4 to 10; page 30, line 9 | |
| | to page 32, line 27; table 1 | |
| | & US 5321108 A | |
| | claims; column 1, lines 5 to 14; column 11, | |
| | line 22 to column 13, line 11; table 1 | |
| | & EP 683799 A1          & CN 1117739 A | |

[X]  Further documents are listed in the continuation of Box C.          [ ]  See patent family annex.

```
*      Special categories of cited documents:
"A"    document defining the general state of the art which is not considered   to
       be of particular relevance
"E"    earlier application or patent but published on or after the international filing
       date
"L"    document which may throw doubts on priority claim(s) or which is
       cited to establish the publication date of another citation or other
       special reason (as specified)
"O"    document referring to an oral disclosure, use, exhibition or other means
"P"    document published prior to the international filing date but later than the
       priority date claimed
```

```
"T"    later document published after the international filing date or priority
       date and not in conflict with the application but cited to understand
       the principle or theory underlying the invention
"X"    document of particular relevance; the claimed invention cannot be
       considered novel or cannot be considered to involve an inventive
       step when the document is taken alone
"Y"    document of particular relevance; the claimed invention cannot be
       considered to involve an inventive step when the document is
       combined with one or more other such documents, such combination
       being obvious to a person skilled in the art
"&"    document member of the same patent family
```

| Date of the actual completion of the international search | Date of mailing of the international search report |
|---|---|
| 05 July 2017 (05.07.17) | 18 July 2017 (18.07.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

## INTERNATIONAL SEARCH REPORT

| | International application No. |
|---|---|
| | PCT/JP2017/015028 |

### C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-139894 A (Dow Corning Toray Silicone Co., Ltd.), | 1-2,4,7-15, 19-20 |
| A | 22 May 2001 (22.05.2001), claims 1 to 2; paragraphs [0001], [0004], [0008] to [0011], [0016], [0020] to [0022], [0027] to [0028], [0031] to [0033], [0038] & EP 1101810 A2 claims 1 to 2; paragraphs [0001], [0004] to [0006], [0010] to [0014], [0019], [0023] to [0024], [0034] to [0035], [0038] to [0040] & KR 10-2001-0051669 A | 3,5-6,16-18 |
| A | JP 2003-113244 A (Shin-Etsu Chemical Co., Ltd.), 18 April 2003 (18.04.2003), entire text (Family: none) | 1-20 |
| A | JP 5-70747 A (Dow Corning Corp.), 23 March 1993 (23.03.1993), entire text (Family: none) | 1-20 |
| A | JP 2003-307601 A (Nitto Denko Corp.), 31 October 2003 (31.10.2003), entire text (Family: none) | 1-20 |
| A | JP 2013-1791 A (Toray Industries, Inc.), 07 January 2013 (07.01.2013), entire text (Family: none) | 1-20 |
| P,A | WO 2016/163069 A1 (Dow Corning Toray Co., Ltd.), 13 October 2016 (13.10.2016), entire text (Family: none) | 1-20 |
| P,A | JP 2016-098334 A (Dow Corning Toray Co., Ltd.), 23 June 2016 (23.06.2016), entire text (Family: none) | 1-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010108490 A
- JP 2011222679 A
- WO 2014105959 A
- US 5436303 A
- WO 19946878 A
- US 7253238 B
- JP 5066078 B
- JP 2010502781 A
- JP 2014522436 W
- JP 2013512326 W
- JP 2015006198 W
- JP 2016001299 W
- JP 2013065009 A